# EUROPEAN PATENT SPECIFICATION

(11) **EP 4 364 331 B1**
(45) Date of publication and mention of the grant of the patent: **19.08.2026**
(21) Application number: 21947504.3
(22) Date of filing: 30.06.2021
(51) Int. Cl.: H04L 1/18

(54) **TECHNIQUES FOR COORDINATING SIDELINK FEEDBACK CHANNEL RESOURCES**
VERFAHREN ZUR KOORDINATION VON SIDELINK-FEEDBACK-KANALRESSOURCEN
TECHNIQUES DE COORDINATION DE RESSOURCES DE CANAL DE RÉTROACTION DE LIAISON LATÉRALE

(43) Date of publication of application: 08.05.2024
(73) Proprietor: Qualcomm Incorporated, San Diego, CA 92121-1714 (US)
(72) Inventor: GUO, Hui, San Diego, CA 92121-1714 (US); NGUYEN, Tien Viet, San Diego, CA 92121-1714 (US); WU, Shuanshuan, San Diego, CA 92121-1714 (US); DUTTA, Sourjya, San Diego, CA 92121-1714 (US); GULATI, Kapil, San Diego, CA 92121-1714 (US); SARKIS, Gabi, San Diego, CA 92121-1714 (US)
(74) Representative: Bardehle Pagenberg Partnerschaft mbB Patentanwälte Rechtsanwälte
(86) International application number: PCT/CN2021/103399
(87) International publication number: WO 2023/272549

(56) References cited:
- CN-A- 111 970 095
- CN-A- 112 840 586
- US-A1- 2020 288 286
- US-A1- 2020 351 057
- US-A1- 2021 105 817
- ITRI: "Discussion on enhancement for NR V2X Mode 2", vol. RAN WG1, no. e-Meeting; 20201026 - 20201113, 20 October 2020 (2020-10-20), XP051940697, Retrieved from the Internet <URL:https://ftp.3gpp.org/tsg_ran/WG1_RL1/TSGR1_103-e/Docs/R1-2007878.zip R1-2007878.docx> [retrieved on 20201020]
- APPLE: "Inter-UE Coordination for Mode 2 Resource Allocation", 3GPP DRAFT; R1-2101358, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 18 January 2021 (2021-01-18), Mobile Competence Centre ; 650, route des Lucioles ; F-06921 Sophia-Antipolis Cedex ; France , XP051971525

## Description

### FIELD OF TECHNOLOGY

The following relates to wireless communications, including techniques for coordinating sidelink feedback channel resources.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some wireless communications systems, a user equipment (UE) may communicate with another UE via a sidelink communications link. For example, a first UE may transmit sidelink control channel signals and subsequent sidelink shared channel signals to a second UE. In some implementations, the second UE may be configured to transmit feedback to the first UE to indicate whether the second UE successfully received and decoded a sidelink shared channel signal from the first UE. Techniques for transmitting sidelink feedback signals may be improved.

Document US 2020/288286 A1, relates to a method for efficiently configuring a resource for a PSFCH.

### SUMMARY

The invention is defined by independent claims 1, 9 and 11. Further details are defined by the dependent claims.

### BRIEF DESCRIPTION OF THE DRAWINGS

FIG. 1 illustrates an example of a wireless communications system that supports techniques for coordinating sidelink feedback channel resources in accordance with aspects of the present disclosure.
FIG. 2 illustrates an example of a wireless communications system that supports techniques for coordinating sidelink feedback channel resources in accordance with aspects of the present disclosure.
FIGs. 3A, 3B, and 3C illustrate examples of collision scenarios that support techniques for coordinating sidelink feedback channel resources in accordance with aspects of the present disclosure.
FIG. 4 illustrates an example of a process flow that supports techniques for coordinating sidelink feedback channel resources in accordance with aspects of the present disclosure.
FIG. 5 illustrates an example of a process flow that supports techniques for coordinating sidelink feedback channel resources in accordance with aspects of the present disclosure.
FIGs. 6 and 7 show block diagrams of devices that support techniques for coordinating sidelink feedback channel resources in accordance with aspects of the present disclosure.
FIG. 8 shows a block diagram of a communications manager that supports techniques for coordinating sidelink feedback channel resources in accordance with aspects of the present disclosure.
FIG. 9 shows a diagram of a system including a device that supports techniques for coordinating sidelink feedback channel resources in accordance with aspects of the present disclosure.
FIGs. 10 through 13 show flowcharts illustrating methods that support techniques for coordinating sidelink feedback channel resources in accordance with aspects of the present disclosure.

### DETAILED DESCRIPTION

In some wireless communications systems, a user equipment (UE) may communicate with one or more other UEs via sidelink communication links. For example, a transmitting UE may transmit a sidelink control channel signal (e.g., physical sidelink control channel (PSCCH)) to a receiving UE. The sidelink control channel signal may include sidelink control information (SCI), that may indicate information (e.g., time resources, frequency resources, a modulation and coding scheme (MCS)) associated with a subsequent sidelink shared channel signal (e.g., physical sidelink shared channel (PSSCH)), where the sidelink shared channel signal may include data for the receiving UE. Accordingly, the receiving UE may identify the information included in the SCI to receive and decode a subsequent PSSCH. In some cases, the PSSCH may be associated with sidelink feedback channel resources (e.g., physical sidelink feedback channel resources (PSFCH) resources) that the receiving UE may use to transmit feedback information associated with the PSSCH to the transmitting UE. For example, the receiving UE may transmit a PSFCH including a positive acknowledgement (ACK) that indicates that the receiving UE successfully received and decoded the PSSCH or a negative acknowledgement (NACK) that indicates that the receiving UE un-successfully received and/or decoded the PSSCH.

In some cases, multiple different receiving UEs may be configured to transmit feedback in the same set of resources based on a set of parameters associated with respective sidelink shared channel signals. For example, a first UE may transmit a first PSSCH to a second UE in a first set of resources, and a third UE may transmit a second PSSCH to a fourth UE in a second set or resources, where the first set of resources and the second set of resources may be the same, partially overlap, or may be different. The first PSSCH may map an associated PSFCH to a set of feedback resources and the second PSSCH may map an associated PSFCH to the same set of feedback resources. Accordingly, the second UE may be configured to transmit feedback to the first UE in the set of feedback resources and the fourth UE may be configured to transmit feedback to the third UE in the set of feedback resources. As such, the first UE and the third UE may receive incorrect or otherwise unreliable feedback information due the collision of feedback channel resources.

To improve feedback channel coordination, one or more devices may be configured to detect feedback channel collisions before the collision occurs or after the collision occurs. Upon pre-collision detection, one or more transmitting UEs (e.g., UEs transmitting the sidelink shared channel associated with the colliding sidelink feedback channel) may determine to refrain from transmitting the sidelink shared channel or determine a new set of resources to transmit the sidelink shared channel to avoid the sidelink feedback channel collision. If the transmitting UE determines to refrain from transmitting the sidelink shared channel, then the associated feedback channel would not be scheduled, and the collision may be avoided. If the transmitting UE determines to transmit the sidelink shared channel in a new set of resources, the associated sidelink feedback channel resources may change, and thus, the collision may be avoided. Upon post-collision detection, one or more of the transmitting UEs may determine to re-transmit the sidelink shared channel to provide another opportunity for the transmitting UE to receive accurate feedback information associated with the re-transmission.

In some cases, a transmitting UE may request one or more neighboring UEs (e.g., receiving UEs, third-party UEs) to monitor for potential sidelink feedback channel resource collisions. If a neighboring UE detects a potential collision (e.g., pre-collision detection) or that a collision has already happened (e.g., post-collision detection) between multiple feedback channel signals, the neighboring UE may transmit an indication of the collision to one or more of the involved transmitting UEs. The neighboring UE may determine which transmitting UEs to transmit the collision indication to based on a set of parameters (e.g., packet priority, position of transmitting UEs, reference signal received power (RSRP)). As such, a transmitting UE may identity a collision based on receiving a collision indication. In some cases, a transmitting UE may identify that a collision occurred based on receiving multiple feedback signals. For example, a transmitting UE may receive a NACK and an ACK in the same set of resources, when the transmitting UE only expected to receive one feedback signal. In such cases, the transmitting UE may determine that a feedback channel collision occurred. Accordingly, a transmitting UE may receive a collision indication or otherwise identify that a collision occurred and may determine whether to transmit (e.g., pre-collision) or re-transmit (e.g., post-collision) the sidelink shared channel in accordance with the collision type (e.g., pre-collision, post-collision).

Particular aspects of the subject matter described herein may be implemented to realize one or more advantages. The described techniques may support improvements in sidelink communications by improving coordination between sidelink feedback signals. The supported techniques may realize improved reliability, and decreased latency, among other advantages. As such, supported techniques may include improved network operations and, in some examples, may promote network efficiencies, among other benefits.

Aspects of the disclosure are initially described in the context of wireless communications systems. Aspects are the described with reference to collision scenarios and process flows. Aspects of the disclosure are further illustrated by and described with reference to apparatus diagrams, system diagrams, and flowcharts that relate to techniques for coordinating sidelink feedback channel resources.

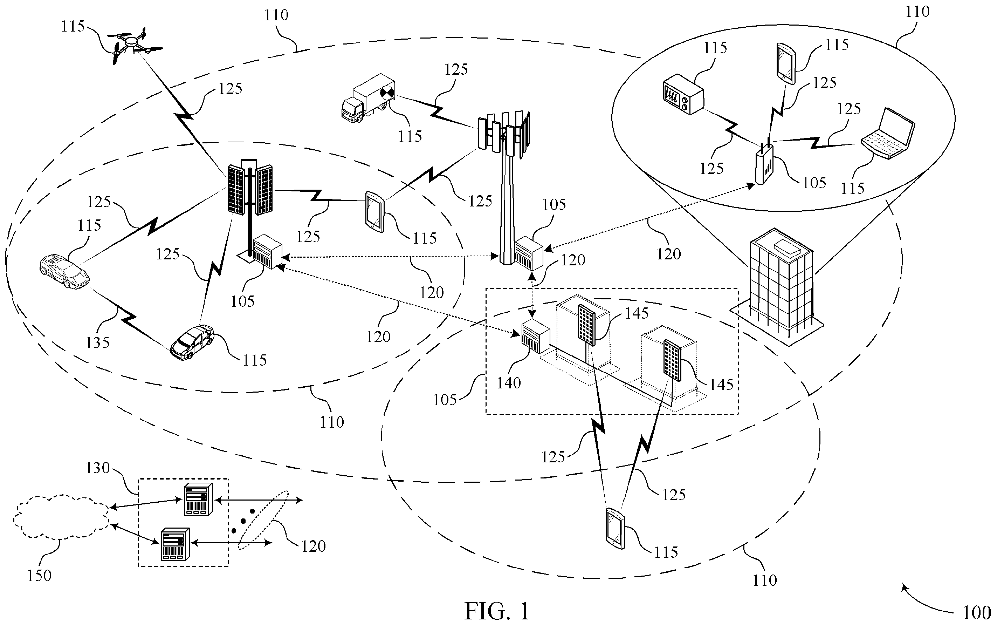

FIG. 1 illustrates an example of a wireless communications system 100 that supports techniques for coordinating sidelink feedback channel resources in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Intemet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the medium access control (MAC) layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

A first UE 115 may reserve, via an SCI transmission, a set of sidelink communication resources for a first sidelink transmission (e.g., a PSSCH transmission) by the first UE 115. The first UE 115 may identify a sidelink feedback channel collision involving a first sidelink feedback transmission (e.g., a PSFCH transmission) associated with the first sidelink transmission and a second sidelink feedback transmission associated with a second sidelink transmission by a second UE 115. The sidelink feedback channel collision may arise from the first sidelink feedback transmission and the second sidelink feedback transmission sharing a same set of feedback channel resources. In some cases, the first UE 115 may identify the collision before the collision occurs, or after.

In some cases, the first UE 115 may identify, post-collision, that a collision occurred based on receiving multiple feedback transmissions in the same set of resources. In some cases, the first UE 115 may identify the collision, pre-collision or post-collision, based on receiving a collision indication. For example, a detecting UE 115 (e.g., a neighboring UE, third-party UE 115) identifies a sidelink feedback channel collision arising from a first sidelink feedback transmission to a first UE 115 and a second sidelink feedback transmission to a second UE 115 sharing same feedback channel resources (e.g., time resources, frequency resources, code resources, such as code division multiplexing (CDM)). The detecting UE 115 identifies, based on identification of the sidelink feedback channel collision, one or more UEs 115 to which a sidelink feedback channel collision indication is to be transmitted, such as the first UE 115. The detecting UE 115 transmits, based on the identification of the sidelink feedback channel collision, the sidelink feedback channel collision indication to the one or more UEs 115.

Upon identifying the collision, the first UE 115 may determine to transmit or retransmit the first sidelink transmission based on the sidelink feedback channel collision being identified. For example, if the first UE 115 identifies the collision before the collision occurs, the first UE 115 may determine whether to transmit the corresponding first sidelink transmission. In some cases, the first UE 115 may determine to refrain from transmitting the first sidelink transmission or may determine to transmit the first sidelink transmission in a new set of resources to avoid the identified feedback channel collision. In another example, if the first UE 115 identifies the collision after the collision occurred, the first UE 115 may determine to retransmit the first sidelink transmission.

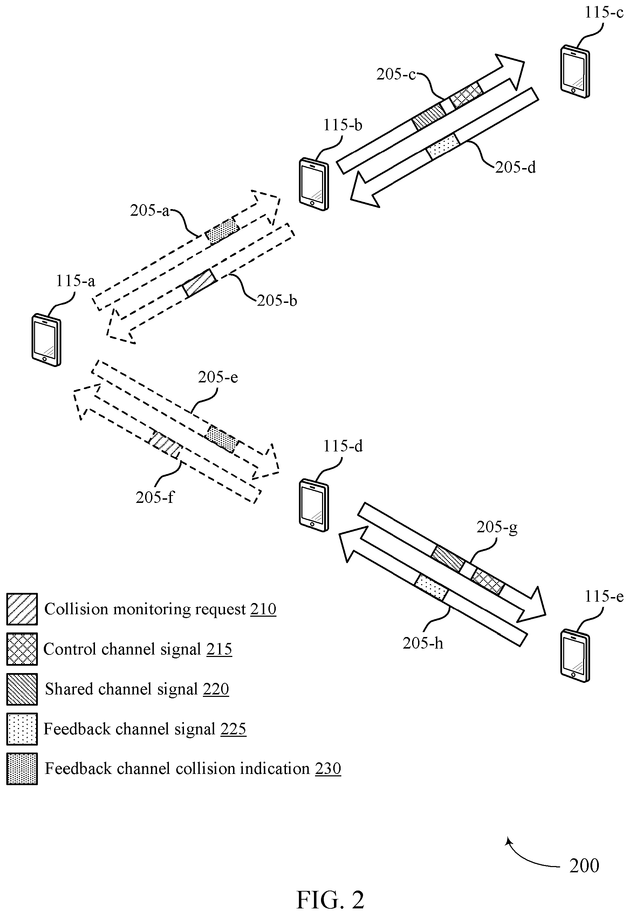

FIG. 2 illustrates an example of a wireless communications system 200 that supports techniques for coordinating sidelink feedback channel resources in accordance with aspects of the present disclosure. The wireless communications system 200 may include UEs 115-a, 115-b, 115-c, 115-d, and 115-e, which may be examples of UEs 115 as described with reference to FIG. 1. UEs 115-a through 115-e may each be served by a base station, where the UEs 115 may be served by the same base station or different base stations. In some cases, UEs 115-a, 115-b, 115-d, or a combination thereof may implement a sidelink feedback channel collision detection procedure. Additionally or alternatively, other wireless devices, such as a base station, or some combination of UEs 115 and base stations, may implement a sidelink feedback channel collision detection procedure.

In some wireless communications systems, such as wireless communications system 200, a UE 115 may communicate with one or more other UEs 115 via sidelink communication links 205. For example, UE 115-b may transmit, via sidelink communications link 205-c, a sidelink control channel signal 215 (e.g., PSCCH) to UE 115-c. The sidelink control channel signal 215 may include SCI (e.g., first-stage SCI), that may indicate information (e.g., time resource, frequency resources, MCS) associated with a subsequent sidelink shared channel signal 220 (e.g., PSSCH). Accordingly, UE 115-c may identify the information included in the SCI to receive and decode a subsequent sidelink shared channel signal 220. In some cases, the sidelink shared channel signal 220 may be associated with sidelink feedback channel resources (e.g., PSFCH resources) that UE 115-c may use to transmit a feedback channel signal 225 associated with the sidelink shared channel signal 220 to UE 115-b. For example, UE 115-c may transmit, via sidelink communications link 205-d, a feedback channel signal 225 including an ACK that indicates that UE 115-c successfully received and decoded the PSSCH or a NACK that indicates that UE 115-c un-successfully received and/or decoded the sidelink feedback channel signal 225.

Similarly, UE 115-d may transmit, via sidelink communications link 205-g, a sidelink control channel signal 215 to UE 115-e. The sidelink control channel signal 215 may include SCI, that may indicate information (e.g., time resource, frequency resources, MCS) associated with a subsequent sidelink shared channel signal 220 (e.g., PSSCH). Accordingly, UE 115-e may identify the information included in the SCI to receive and decode a subsequent sidelink shared channel signal 220. In some cases, the sidelink shared channel signal 220 may be associated with sidelink feedback channel resources (e.g., PSFCH resources) that UE 115-e may use to transmit a feedback channel signal 225 associated with the sidelink shared channel signal 220 to UE 115-d. For example, UE 115-e may transmit, via sidelink communications link 205-h, a feedback channel signal 225 including an ACK that indicates that UE 115-e successfully received and decoded the PSSCH or a NACK that indicates that UE 115-e un-successfully received and/or decoded the sidelink feedback channel signal 225.

The sidelink shared channel signal 220 received by a UE 115 may include SCI (e.g., second-stage SCI) and a data channel (e.g., a transport block). The second-state SCI may indicate one or more parameters associated with the sidelink shared channel signal 220. In some cases, the second-stage SCI may indicate a source identifier (ID) (e.g., source Layer-1 ID), that may indicate the UE 115 transmitting the sidelink shared channel signal 220. The source ID may be mapped from a source ID of the transmitting UE 115 (e.g., source Layer-2 ID), such as UE 115-b, UE 115-d. A source Layer-2 ID may be self-assigned by the UE 115 originating the corresponding Layer-2 frames, such as UE 115-b, UE 115-d. In some cases, the second-stage SCI may indicate a destination ID, that may indicate the UE 115 receiving the sidelink shared channel signal 220. The destination ID may be mapped from a destination Layer-2 ID, where the destination Layer-2 ID may be mapped from V2X service type, group ID, source Layer-2 ID (e.g., source ID of the peer UE in unicast), or a combination thereof. In some cases, a transmitting UE 115 (e.g., UEs 115-b and 115-d) may select the source ID and the destination ID based on a communications mode of V2X communications (e.g., over PC5 reference point for the Layer-2 link). For example, for a groupcast mode of V2X communications (e.g., over a PC5 reference point) and when the group ID is provided by the V2X application layer, the transmitting UE 115 may convert the provided group ID into a destination Layer-2 ID. In another example, for a groupcast mode of V2X communications (e.g., over a PC5 reference point) and when the group ID is not provided by the V2X application layer, the transmitting UE 115 may determine the destination Layer-2 ID based on a configuration of the mapping between V2X service type and Layer-2 ID.

As described herein, the sidelink feedback channel resources may be determined based on the associated sidelink shared channel signal 220. For example, with L, sub-channels in a resource pool and N PSSCH slots associated with a slot containing PSFCH, there are then *M* (multiple of *N* · *L)* physical resources blocks (PRBs) available for PSFCH. Accordingly, there are *Mₛₑₜ = M*/(*N · L*) feedback resource (in unit of RB) for one sub-channel and one slot. Further, there are $R = {M}_{set} ∗ {N}_{CS}^{PSFCH}$ available resources for ACK/NACK feedback of up to R receiving UEs 115, where ${N}_{CS}^{PSFCH}$ may the number of cyclic shift pairs and may be 1, 2, 3 or 6. A receiving UE 115 (e.g., UE 115-c, UE 115-e), may calculate a feedback resource with index, i, where *i = mod*(*P_{ID} + M*_{ID}*, R). P_{ID}* may be the Layer-1 ID of the transmitting UE (indicated in second-stage SCI). *M*_{ID} = 0 for unicast and groupcast option 1 (e.g., SCI format 2-B). *M*_{ID} may be the receiving UE ID within the group indicated by higher layers for groupcast option 2 (e.g., SCI format 2-A). The index, i, may first increase with the PRB index, and then increase with the cyclic shift pair index.

In some cases, multiple different receiving UEs 115 may be configured to transmit feedback in the same set of resources (based on a set of parameters associated with respective sidelink shared channel signals 220. For example, assuming a 40 MHz NR-V2X system with 30 kHz SCS, a number of PSFCH RBs, may be equal to 80 RBs (e.g., M = 80 RBS), a number of PSSCH slots associated with one PSFCH slot, N, may be equal to four (e.g., N = 4), a subchannel size may be equal to 10 RBs (e.g., subchannel size = 10 RBs), and the number of sub-channels, L, may be equal to ten (e.g., L = 10). Accordingly, there may be two resource blocks available per sub-channel and per slot (e.g., *Mₛₑₜ = M*/(*N · L)* = 2 RBs). If the number of cyclic shift pairs is equal to two *(e.g.,* ${N}_{cs}^{PSFCH} = 2$), then the number of available resources for ACK/NACK feedback may be equal to four (e.g., $R = {M}_{set} ⋅ {N}_{cs}^{PSFCH} = \left.4\right)$ . If group member size is larger than four, ACK/NACK feedback for groupcast option 2 may back-off to a NACK-only feedback mode (e.g., due to insufficient resources to perform ACK and NACK feedback). The PSFCH resource index may be calculated according to: *i* = *mod*(*P_{ID} + M*_{ID}*, R),* where *M*_{ID} = 0 for unicast or groupcast option 1. In some cases, UE 115-b and UE 115-d may transmit a sidelink shared channel signal 220 (e.g., a transport block) using the same or overlapping resource. Therefore, the source ID for both UEs follows *mod*(*P*_{*ID_*1}*, R) = mod*(*P*_{*ID_*2}*,* R). Accordingly, feedback channel resources for both UEs 115-b and 115-d may collide.

For example, UE 115-c may transmit a first sidelink shared channel signal 220 to UE 115-c in a first set of resources, and UE 115-d may transmit a second sidelink shared channel signal 220 to UE 115-e in a second set or resources, where the first set of resources and the second set of resources may be the same, partially overlap, or may be different. The first sidelink shared channel signal 220 may map an associated sidelink feedback channel signal 225 to a set of feedback resources and the second sidelink shared channel signal 220 may map an associated sidelink feedback channel signal 225 to the same set of feedback resources (e.g., time resources, frequency resources, code resources, such as code division multiplexing (CDM)). Accordingly, UE 115-c may be configured to transmit feedback to UE 115-b in the set of feedback resources and UE 115-e may be configured to transmit feedback to UE 115-d in the set of feedback resources. As such, UE 115-b and UE 115-d may receive incorrect or otherwise unreliable feedback information due the collision of feedback channel resources.

For example, in some cases (e.g., groupcast 1 option one associated with NACK-only feedback, unicast), if multiple UEs 115 transmit a sidelink shared channel signal 220 (e.g., a transport block) using overlapping resources, there is a potential for the corresponding sidelink feedback channel resources to overlap (e.g., *mod*(*P*_{*ID_*1}*, R)* = *mod*(*P*_{*ID_*2}*, R)).* For example, UEs 115-c and 115-e may each be configured to transmit a sidelink feedback channel signal 225 to UEs 115-b, and 115-d, respectively, where UEs 115-c and 115-e may be configured to transmit the feedback in the same set of resources and in accordance with a groupcast option 2 (e.g., ACK/NACK feedback). In accordance with reception possibility 1 in Table 1, UE 115-c may transmit a NACK in the set of resources, and UE 115-e may transmit an ACK in the set of resources. Accordingly, UE 115-b and/or UE 115-d may each expect to receive a single feedback message but may instead receive multiple feedback messages (e.g., an ACK and a NACK). As UEs 115-b and 115-d received both sidelink feedback channel signals 225 in the same set of resources, UEs 115-b, and 115-d may be unable to differentiate which UE 115 transmitted which sidelink feedback channel signal 225 and UEs 115-b and 115-d may be unable to reliably determine whether to re-transmit a sidelink shared channel signal 220.

In another example, in some cases (e.g., groupcast option 2 associated with ACK/NACK feedback), if *R < a number of group members,* then the UE 115 may fallback to NACK-only feedback (e.g., groupcast option 1). If multiple UEs 115 are configured to transmit feedback information in accordance with groupcast option 1 in the same set of resources, then a transmitting UE 115 (e.g., UE 115-b, 115-d), may receive a NACK when the transmitting UE 115 should have otherwise not received a sidelink feedback channel signal 225 (e.g., indicating an ACK). For example, both UEs 115-c and 115-e may be configured to transmit a sidelink feedback channel signal 225 to UEs 115-b, and 115-d, respectively, in accordance with groupcast option 1. In accordance with reception possibility 1 in Table 1, UE 115-c may transmit a NACK and UE 115-e may not transmit a sidelink feedback channel signal 225 because UE 115-e successfully received and decoded a corresponding sidelink shared channel signal 220 (e.g., in accordance with groupcast option 1). Accordingly, UE 115-b may receive a NACK appropriately, and determine to re-transmit the sidelink shared channel signal 220. If the sidelink feedback channel resources were not overlapping, UE 115-d should not receive a sidelink feedback channel signal 225 because UE 115-e did not transmit one and as such, UE 115-d may determine that UE 115-e successfully received and decoded the sidelink shared channel signal 220. However, if the sidelink feedback channel resources do overlap, UE 115-d may inaccurately receive the NACK from UE 115-c and assume that UE 115-e un-successfully received and/or decoded the sidelink shared channel signal 220. In response, UE 115-d may re-transmit the shared channel signal 220 to UE 115-e resulting in a waste of resources because UE 115-e already successfully decoded the signal.

In another example, if one or both of UEs 115-c and 115-e are configured to transmit feedback in accordance with groupcast option 2, then a transmitting UE 115 (e.g., UE 115-b, or UE 115-d) may receive an ACK when the transmitting UE 115 should have received a NACK. With reference to reception possibility 2, UE 115-e may transmit an ACK to UE 115-d in the set of feedback resources, and UE 115-c may be in a discontinues reception mode, for example, due to not being able to decode the first-stage SCI, the second-stage SCI, or both. If UE 115-b identifies that UE 115-c is configured to transmit feedback in accordance with groupcast option 2, then UE 115-b may expect to receive a feedback signal from UE 115-c including an ACK or NACK. However, due to the discontinuous reception, UE 115-c may not transmit a sidelink feedback channel signal 225. If the sidelink feedback channel resources do not overlap, then UE 115-b may not receive a sidelink feedback signal from UE 115-c, even though UE 115-c expects to and as such, UE 115-b may determine to re-transmit at least the sidelink shared channel signal 220. If, however, the sidelink feedback channel resources do overlap, then UE 115-b and UE 115-d may each receive an ACK. Due to receiving an ACK in the appropriate feedback channel resources, UE 115-b may determine that UE 115-c successfully received a corresponding sidelink shared channel signal 220, even though UE 115-c did not. Accordingly, UE 115-b and UE 115-d may each determine not to re-transmit respective sidelink shared channel signals 220. As such, UE 115-c may experience reduced reliability.

**Table 1.**

| Reception Possibilities | Received at UE 115-b | Received at UE 115-d | Impact |
|---|---|---|---|
| 1 | NACK | N/A (ACK) | UE 115-b and UE 115-b both re-transmit. |
| 2 | N/A (DTX) | ACK | UE 115-b will not re-transmit. |
| 3 | NACK | ACK | Not defined. |

To improve feedback channel coordination, one or more devices (e.g., such as UEs 115, or base stations 105) may be configured to detect sidelink feedback channel collisions before the collision occurs or after the collision occurs. Upon pre-collision detection, one or more transmitting UEs 115 (e.g., UEs 115-b, UE 115-d) may determine to refrain from transmitting the sidelink shared channel signal 220 or determine a new set of resources to transmit the sidelink shared channel signal 220 to avoid the sidelink feedback channel collision. If the transmitting UE 115 determines to refrain from transmitting the sidelink shared channel signal 220, then the associated sidelink feedback channel signal 225 would not be scheduled, and the collision may be avoided. If the transmitting UE 115 determines to transmit the sidelink shared channel signal 220 in a new set of resources, then the associated sidelink feedback channel resources may change, and thus, the collision may be avoided. Upon post-collision detection, one or more of the transmitting UEs 115 involved in the collisions may determine to re-transmit the sidelink shared channel signal 220 to provide another opportunity for the transmitting UE 115 to receive accurate feedback information associated with the re-transmission.

In some cases, a transmitting UE 115 may request one or more neighboring UEs 115 (e.g., receiving UEs, third-party UEs) to monitor for potential sidelink feedback channel resource collisions. For example, UE 115-b may determine to transmit a collision monitoring request 210 to UEs 115-a (e.g., a third-party UE 115), 115-c, 115-d, 115-e, or a combination thereof. Similarly, UE 115-d may determine to transmit a collision monitoring request 210 to one or more UEs 115. For example, UE 115-b may transmit a collision monitoring request 210 to at least UE 115-a via sidelink communications link 205-a and UE 115-d may determine to transmit a collision monitoring request 210 to at least UE 115-a via sidelink communications link 205-f.

In some implementations, a transmitting UE 115 may determine to transmit the collision monitoring request 210 based on a set of thresholds, such as a re-transmission threshold, a priority threshold, a channel busy ratio (CBR) threshold, etc. For example, UE 115-b may determine to transmit the collision monitoring request 210 to the one or more neighboring UEs 115, such as UE 115-a, if a number of re-transmissions of the sidelink shared channel signal 220 is less than a re-transmission threshold. UE 115-b may count a number of re-transmissions sent by UE 115-b of a sidelink shared channel signal 220 and compare the counted re-transmissions to a maximum number of retransmissions UE 115-b may perform for the sidelink shared channel signal 220. If the number of counted re-transmissions is less than a retransmission threshold, where the retransmission threshold is based on the maximum number of retransmissions, then UE 115-b may transmit a collision monitoring request 210. For example, if the maximum retransmission of the current packet transmission (e.g., sidelink shared channel signal 220) is eight, UE 115-b may transmit a collision monitoring request 210 when the counted number of retransmissions is less than four (e.g., the retransmission threshold).

For example, UE 115-b may determine to transmit the collision monitoring request 210 to one or more neighboring UEs 115, such as UE 115-a, based on a packet priority of sidelink shared channel signal 220 transmission being greater than a priority threshold. If the packet priority is greater than a threshold (e.g., based on a priority indication in first-stage SCI), then UE 115-b may determine to transmit the collision monitoring request 210 to one or more neighboring UEs 115. to improve the reliability of this transmission.

In another example, UE 115-b may determine to transmit the request to the one or more neighboring UEs 115 if a number of retransmissions of the sidelink shared channel signal 220 within a time interval is greater than a retransmission threshold. For example, UE 115-b may count the number of retransmissions UE 115-b transmits for a certain sidelink shared channel signal 220 in a duration. If the number of retransmissions exceeds a retransmission threshold (e.g., the number of retransmission is statistically high during a period), UE 115-b may determine that feedback resource collision is the reason for frequent retransmissions. Accordingly, if the number of retransmissions exceeds a retransmission threshold, the UE 115-b may determine to transmit the monitoring request.

In another example, UE 115-b may determine to transmit the request to the one or more neighboring UEs 115 based on a CBR of the sidelink shared channel signal 220 being greater than a CBR threshold. For example, of the CBR for a sidelink shared channel signal 220 is above a threshold, UE 115-b may determine to transmit the monitoring request to the one or more neighboring UEs 115 to avoid unnecessary retransmissions.

The transmitting UEs 115 may be configured with the set of thresholds for determining when to transmit a collision monitoring request 210 (e.g., via radio resource control (RRC), downlink control information (DCI), SCI, MAC-control element (MAC-CE)). In some implementations, a transmitting UE 115 may determine (autonomously) the one or more thresholds. In some cases, the transmitting UEs 115 may be configured aperiodically, semi-statically, or dynamically, with a set of neighboring UEs 115 to transmit a collision monitoring request 210 to (e.g., via RRC, DCI, SCI, MAC-CE). In some cases, the transmitting UEs 115 may determine (autonomously) which neighboring UEs 115 to transmit the collision monitoring request 210 to.

A transmitting UE 115 may transmit a collision monitoring request 210 per application, per sidelink shared channel transmission, per transmitting UE granularity, or a combination thereof. A transmitting UE 115 may transmit the collision monitoring request 210 in an SCI message. For example, if the transmitting UE 115 transmits the collision monitoring request per transmitting UE granularity, the transmitting UE 115 may include the collision monitoring request 210 as a single bit in a second-stage SCI message. In some cases, the transmitting UE 115 may include the collision monitoring request 210 in MAC-CE, where the collision monitoring request 210 may be included with a sequence of packets. In some cases, the transmitting UE 115 may include with the collision monitoring request 210, an indication of which feedback channel resources to monitor the collision on. For example, the transmitting UE 115 may indicate in the collision monitoring request 210, an application (e.g., destination ID) and/or resource reservation to indicate to the neighboring UE 115, feedback channel resources to monitor the collision on.

Accordingly, one or more neighboring UEs 115 may receive a request, from one or more transmitting UEs 115, to monitor for feedback channel collisions. In some cases, a neighboring UE 115 may receive, from a base station 105, an indication to monitor for feedback channel collisions (e.g., RRC, DCI, MAC-CE). In some cases, a neighboring UE 115 may be pre-configured to monitor for feedback channel collisions, and/or a neighboring UE 115 may determine (autonomously) whether to monitor for feedback channel collisions, such as based on one or more conditions (e.g., channel conditions, environment conditions, network conditions).

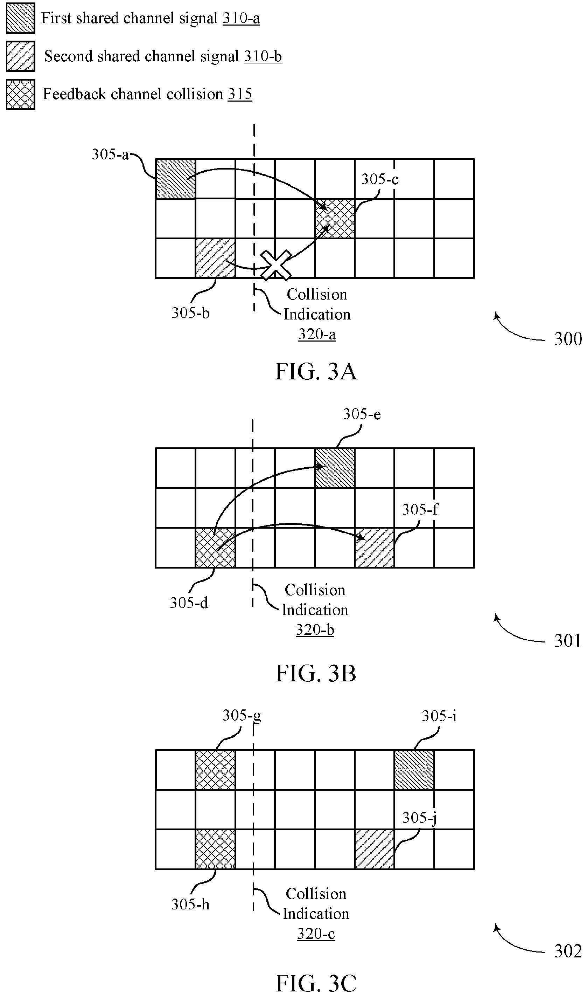

If a neighboring UE 115, such as UE 115-a, detects a potential collision (e.g., pre-collision detection, as described with reference to FIG. 3A) or that a collision has already happened (e.g., post-collision detection, as described with reference to FIGs. 3B and 3C) between multiple sidelink feedback channel signals 225, the neighboring UE 115 may transmit an indication of the collision (e.g., feedback channel collision indication 230) to one or more of the involved transmitting UEs 115. The neighboring UE 115 may determine which transmitting UE 115 to transmit the collision indication to based on a set of parameters (e.g., packet priority, position of transmitting UEs, RSRP, etc. as described in more detail with reference to FIGs. 3A through 3C). For example, UE 115-a may determine to transmit the feedback channel collision indication 230 to UE 115-b (e.g., via sidelink communications link 205-b), or to UE 115-d (e.g., via sidelink communications link 205-e), or both based on the set of parameters. As such, UEs 115-b, or 115-d, or both may identify a collision based on receiving a feedback channel collision indication 230 from UE 115-a.

In some cases, a transmitting UE 115 may identify that a feedback channel collision occurred based on receiving multiple feedback signals. For example, a transmitting UE 115 may receive a NACK and an ACK in the same set of resources, when the transmitting UE 115 only expected to receive one sidelink feedback channel signal 225. In such cases, the transmitting UE 115 may determine that a feedback channel collision occurred. As such, a transmitting UE 115 may receive a collision indication or otherwise identify that a collision occurred and may determine whether to transmit (e.g., pre-collision) or re-transmit (e.g., post-collision) the sidelink shared channel in accordance with the collision type (e.g., pre-collision, post-collision).

FIGs. 3A, 3B, and 3C illustrate examples of collision scenarios 300, 301, 302, that support techniques for coordinating sidelink feedback channel resources in accordance with aspects of the present disclosure. The collision scenarios 300, 301, and 302 may be monitored by one or more UEs, which may be examples of UEs as described with reference to FIGs. 1 and 2. A UE 115 may implement a sidelink feedback channel collision detection procedure. For example, a UE 115 (e.g., detecting UE, transmitting UE) may monitor for the one or more collision scenarios 300, 301, and 302 and take action based on identifying a collision (e.g., transmit an indication of the collision, determine whether to transmit or re-transmit). Additionally or alternatively, other wireless devices, such as a base station, or some combination of UEs and base stations, may implement a sidelink feedback channel collision detection procedure.

With reference to FIG. 3A, a first transmitting UE may transmit a first shared channel signal 310-a in a first set of resources 305-a (e.g., time resources, frequency resources) and a second transmitting UE may transmit a second shared channel signal 310-b in a second set of resources (e.g., a same or different UE than the first transmitting UE). As described with reference to FIG. 2, multiple different shared channel signals 310 may be associated with the same set of resources (e.g., same, overlapping, same-slot resources) for respective feedback channel transmissions. For example, the first shared channel signal 310-a and the second shared channel signal 310-b may map to feedback channel resources occurring in resources 305-c (e.g., resulting in a feedback channel collision 315). However, a detecting UE may monitor for sidelink feedback channel collisions 315. For example, the detecting UE may receive SCI (e.g., first stage SCI, second-stage SCI, or both) from one or more transmitting UEs and calculate the corresponding feedback channel resources associated with each received SCI (e.g., based on source ID, destination ID, groupcast option). Based on the calculation, the detecting UE may determine whether any two or more of calculated feedback channel resources correspond to the same set of resources.

**In** some cases, the detecting UE may identify a collision of multiple (e.g., two or more) sidelink feedback channel signals before the collision occurs. Accordingly, the detecting UE may transmit a message to one or more UEs involved in the collision to indicate that the feedback channel collision 315 will occur. The collision indication may prompt the one or more UEs to determine whether to transmit the original sidelink shared channel signal 310. For example, in some cases, a transmitting UE may receive a feedback channel collision indication and determine to refrain from transmitting the corresponding sidelink shared channel signal 310 to avoid the collision. In another example, a transmitting UE may receive a feedback channel collision indication and determine to transmit the corresponding sidelink shared channel signal 310 in a different set of resources so that the associated feedback channel resources change and the collision is avoided.

A detecting UE may be configured with a set of parameters to use in determining which transmitting UEs involved in the collision to send the collision indication to in the case of pre-collision detection and indication. The set of parameters may include relative positions of the transmitting UEs to the detecting UE, RSRP associated with each transmitting UE, time order of reservation by each transmitting UE, packet priority, collision indication type, etc.

For example, a detecting UE may detect the feedback channel collision 315 at resource 305-c and determine the collision is due to sidelink shared channel signals 310 (e.g., first sidelink shared channel signal 310-a, and second sidelink shared channel signal 310-b) transmitted from a first UE and a second UE, respectively. To determine whether to transmit the collision indication to the first UE, the second UE, or both, the detecting UE may use the set of parameters. In some implementations, the detecting UE may determine a first relative position of the first UE to the detecting UE and a second relative position of the second UE to the detecting UE. In some cases, the detecting UE may compare the first relative position and the second relative position to a relative position threshold and transmit the collision indication based on the relative positions being less than a threshold. For example, if the first relative position and the second relative position are both less than the relative position threshold, then the detecting UE may transmit the collision indication to both the first UE and the second UE. Alternatively, if the first relative position is greater than the relative position threshold, and the second relative position is less than the relative position threshold, then the detecting UE may transmit the collision indication to just the second UE. In another case, the detecting UE may determine which UE to transmit the collision indication to by comparing the first relative position to the second relative position, where the detecting UE may transmit the collision indication to the UE associated with the lower relative position. The detecting UE may be configured with the relative position threshold aperiodically, semi-statically, or dynamically, of the detecting UE may determine the relative position threshold. The detecting UE may be configured or otherwise determine to use the relative position threshold or to compare the relative positions to each other to determine which UEs to transmit the collision indication to.

In some implementations, the detecting UE may determine a first RSRP of the first UE (e.g., based on one or more signals from the first UE) and a second RSRP of the second UE (e.g., based on one or more signals from the second UE). In some cases, the detecting UE may compare the first RSRP and the second RSRP to an RSRP threshold and transmit the collision indication based on the RSRPs being greater than the RSRP threshold. For example, if the first RSRP and the second RSRP are both greater than the RSRP threshold, then the detecting UE may transmit the collision indication to both the first UE and the second UE. Alternatively, if the first RSRP is less than the RSRP threshold, and the second RSRP is greater than the RSRP threshold, then the detecting UE may transmit the collision indication to just the second UE. In another case, the detecting UE may determine which UE to transmit the collision indication to by comparing the first RSRP to the second RSRP, where the detecting UE may transmit the collision indication to the UE associated with the higher RSRP. The detecting UE may be configured with the RSRP threshold aperiodically, semi-statically, or dynamically, of the detecting UE may determine the RSRP threshold. The detecting UE may be configured or otherwise determine to use the RSRP threshold or to compare the RSRP to each other to determine which UEs to transmit the collision indication to. In some cases (e.g., groupcast option 2, unicast), the detecting UE may use RSRPs to determine which UEs to transmit the collision indication to if relative position information of the UEs is unavailable. For example, RSRPs may be a default approach to determine which UEs to transmit the collision indication to when location information is unavailable.

In some implementations, the detecting UE may receive a first SCI (e.g., a first reservation) from the first UE and a second SCI (e.g., a second reservation) from the second UE. The first SCI may indicate a resource reservation for the first UE to transmit a sidelink shared channel signal 310 and/or to receive a corresponding sidelink feedback channel signal and the second SCI may indicate a resource reservation for the second UE to transmit a sidelink shared channel signal 310 and/or to receive a corresponding sidelink feedback channel signal. In some cases, the detecting UE may transmit the collision indication to the UE associated with the later received SCI (e.g., or sidelink shared channel signal 310). For example, as the detecting UE received the second shared channel signal 310-b after the first shared channel signal 310-a, then the detecting UE may transmit the collision indication 320-a to the second UE.

In some implementations, the detecting UE may determine a priority of each sidelink shared packet associated with the feedback channel collision 315. For example, the first shared channel signal 310-a may have a first priority and the second shared channel signal 310-b may have a second priority. In some cases, the detecting UE may compare the first priority and the second priority to a priority threshold and transmit the collision indication based on the priorities being less than the priority threshold. For example, if the first priority and the second priority are both less than the priority threshold, then the detecting UE may transmit the collision indication to both the first UE and the second UE. Alternatively, if the first priority is greater than the priority threshold, and the second priority is less than the priority threshold, then the detecting UE may transmit the collision indication to just the second UE. In another case, the detecting UE may determine which UE to transmit the collision indication to by comparing the first priority to the second priority, where the detecting UE may transmit the collision indication 320 to the UE associated with the lower priority. The determination of which UEs to transmit the collision indication 320 may be based on the detecting UE identifying the collision before it occurs. For example, because the collision has yet to happen, the detecting UE may indicate to the UE associated with the lower priority to refrain from or to change the resources being used to transmit the lower priority transmission that is causing collision so that the UE associated with the higher priority transmission may reliably receive feedback for the higher priority transmission (without a collision). The detecting UE may be configured with the priority threshold aperiodically, semi-statically, or dynamically, of the detecting UE may determine the priority threshold. The detecting UE may be configured or otherwise determine to use the priority threshold or to compare the priorities to each other to determine which UEs to transmit the collision indication to.

**In** some cases, the detecting UE may transmit the collision indication 320-a immediately after the second shared channel signal 310-b. In some cases, the detecting UE may transmit the collision indication 320-a immediately before the feedback channel collision 315. In another case, the detecting UE may transmit the collision indication 320 immediately after the later reservation (e.g., the second shared channel signal 310-b) if the detecting UE has determined to transmit the collision indication 320 to the second UE (e.g., the UE that reserves later), otherwise the detecting UE may transmit the collision indication 320 immediately before the reserved resource. For example, if the detecting UE determines to transmit the collision indication 320 to the first UE, the detecting UE may transmit the collision indication 320 immediately before the feedback channel collision 315.

With reference to FIG. 3B, a first transmitting UE may transmit a first shared channel signal 310-a in a first set of resources (e.g., time resources, frequency resources) and a second transmitting UE may transmit a second shared channel signal 310-b in a second set of resources (e.g., a same or different UE than the first transmitting UE). As described with reference to FIG. 2, multiple different shared channel signals 310 may be associated with the same set of resources (e.g., same, overlapping, same-slot resources) for respective feedback channel transmissions. For example, the first shared channel signal 310-a and the second shared channel signal 310-b may map to feedback channel resources occurring in resources 305-d (e.g., resulting in a feedback channel collision 315).

In some cases, a detecting UE may monitor for sidelink feedback channel collisions 315, such as, after receiving a monitoring request to do so. The detecting UE may identify a collision of multiple (e.g., two or more) sidelink feedback channel signals after the collision occurs. In some cases, the detecting UE may determine the collision based on one or more parameters (e.g., source ID, destination ID, groupcast option), where the detecting UE may determine such parameters based on information derived from SCI (e.g., second-stage SCI) or the colliding feedback transmission, or both. Upon identifying the collision, the detecting UE may transmit a message to one or more UEs involved in the collision to indicate that the feedback channel collision 315 occurred (e.g., collision indication 320-b). In some cases, the detecting UE may be configured to transmit the collision indication 320 to each UE involved in the collision. In some cases, the detecting UE may determine which of the UEs involved in the collision to transmit collision indication 320 to based on a set of conditions.

Similarly to pre-collision indication, the one or more conditions the detecting UE may use to determine which UEs to transmit the post-collision indication 320 to may include relative positions of the transmitting UEs to the detecting UE, RSRP associated with each transmitting UE, packet priority, collision indication type, etc. Additionally, the set of conditions may include a transmission type of the associated shared channel signal 310.

In the case of packet priority and collision type, because the detecting UE detected a post-collision, the detecting UE may be configured to transmit the collision indication 320 to UEs with high priories so that the UEs have an opportunity to retransmit the high priority sidelink shared channel. In some cases, the detecting UE may compare shared channel priorities to a priority threshold and transmit the collision indication based on the priorities being greater than the priority threshold. For example, the detecting UE may determine a priority of each sidelink shared packets associated with the feedback channel collision 315. For example, a first shared channel signal 310 may have a first priority and a second shared channel signal 310 may have a second priority. If the first priority and the second priority are both greater than the priority threshold, then the detecting UE may transmit the collision indication to both the first UE and the second UE. Alternatively, if the first priority is greater than the priority threshold, and the second priority is less than the priority threshold, then the detecting UE may transmit the collision indication to just the first UE. In another case, the detecting UE may determine which UE to transmit the collision indication by comparing the first priority to the second priority, where the detecting UE may transmit the collision indication 320 to the UE associated with the higher priority.

In some implementations, the detecting UE may determine which UE to transmit the collision indication 320 to based on a transmission type (e.g., initial transmission, first retransmission, fourth retransmission) of the associated shared channel signal 310. The detecting UE may determine a transmission type of each shared channel signal 310 based on SCI (e.g., a new data indicator (NDI) in second-state SCI). For example, the detecting UE may determine that the first shared channel signal 310 is an initial transmission and that the second shared channel signal 310 is a re-transmission. Accordingly, the detecting UE may transmit the collision to the first UE based on the first shared channel signal 310 being an initial transmission.

In some cases, the collision indication (e.g., pre or post collision indication) may be a NACK. For example, in the case of post-collision, the detecting UE may transmit a NACK to the one or more involved UEs to ensure that the one or more UEs re-transmits the shared channel transmission associated with the collision. In some cases, the collision indication (e.g., pre- or post-collision indication) may be or include a new set of feedback channel resources to use for a transmitting (or retransmitting) the shared channel signal 310. In some cases, the collision indication may include a new resource mapping rule that indicates a new rule for mapping the feedback channel to a set of resources based on a corresponding sidelink shared channel. The new resource mapping rule may include bit reshuffling of a sidelink shared channel signal 310 before feeding it to the mapping rule to determine the feedback channel resource. In some cases, the new mapping rule may use only the source ID (e.g., rather than a source ID and destination ID) to map the feedback channel resources (e.g., to map resource block location and sequence cyclic shift index).

In some implementations, a transmitting UE, such as the first UE or the second UE, may identify a feedback channel collision 315 without receiving a collision indication 320. For example, if a transmitting UE expects to receive one feedback signal in a set of resources, but instead receives multiple (e.g., an ACK and NACK), then the transmitting UE may determine that a feedback channel collision 315 occurred.

The collision indication 320, or otherwise determining that a collision occurred (e.g., based on receiving multiple feedback signals in a set of resources), may prompt the one or more UEs involved in the collision to determine whether to retransmit the original shared channel signal 310. For example, the first UE and the second UE may each receive a collision indication 320-b, or may otherwise determine that collision occurred, and accordingly, the first UE may determine to retransmit the first shared channel signal 310-a in resources 305-e, or the second UE may determine to retransmit the second shared channel signal 310-b in resources 305-f, or both.

A detecting UE may be configured with a set of parameters to use in determining which transmitting UEs involved in the collision to send the collision indication 320 to in the case of post-collision detection and indication. The set of parameters may include relative positions of the transmitting UEs to the detecting UE, RSRP associated with each transmitting UE, time order of reservation by each transmitting UE, packet priority, collision indication type, etc.

In some cases, a transmitting UE that detects a collision and determines to retransmit the corresponding sidelink shared channel signal 310, may request for the receiving UE to transmit ACK/NACK feedback (e.g., regardless of whether the receiving UE is configured to transmit according to groupcast option 1, NACK-only feedback). Accordingly, the transmitting device may retransmit the sidelink shared channel signal 310 (e.g., retransmit the same packet with NDI bit flipped) and even if a receiving UE already received the sidelink shared channel signal 310 in the initial transmission, the receiving device may transmit an ACK (or NACK) based on whether the receiving UE successfully received and decoded the retransmission.

In some implementations, if a transmitting UE receives multiple feedback signals (e.g., when the receiving UE only expected one), and does not receive a collision indication 320, then the transmitting device may determine whether to retransmit based on the multiple feedback signals. For example, if the UE receives a NACK and ACK, NACK may trump the ACK. Accordingly, the transmitting device may retransmit the sidelink shared channel signal 310 (e.g., with a different redundancy version). In some cases, the transmitting device may determine that the NACK trumps the ACK based on the one or more conditions (e.g., if the priority of the packet is higher than a priority threshold, the CBR is below a CBR threshold, the packet delay budget (PDB) is larger than a power delay profile (PDP) threshold, or a combination thereof). In another example, if the UE receives a NACK and ACK, the ACK may trump the NACK. Accordingly, the transmitting device may not retransmit the sidelink shared channel signal 310 based on the ACK. In some cases, the transmitting device may determine that the ACK trumps the NACK based on the one or more conditions (e.g., if the priority of the packet is relatively low compared to a priority threshold, the CBR is higher than a CBR threshold, the PDB is less than a PDP threshold, or a combination thereof. In some cases, the transmitting device may determine that the ACK trumps the NACK based on a number of retransmissions of the sidelink shared channel signal 310 (e.g., retransmission of the packet, transport block).

With reference to FIG. 3C, a first transmitting UE may transmit a first shared channel signal 310-a in a first set of resources (e.g., time resources, frequency resources) and a second transmitting UE may transmit a second shared channel signal 310-b in a second set of resources (e.g., a same or different UE than the first transmitting UE). As described with reference to FIG. 2, multiple different shared channel signals 310 may be associated with the same set of resources (e.g., same, overlapping, same-slot resources) for respective feedback channel transmissions. For example, the first shared channel signal 310-a may map to feedback channel resources occurring in resources 305-g and the second shared channel signal 310-b may map to feedback channel resources occurring in resources 305-h (e.g., resulting in a half-duplex feedback channel collision 315).

In accordance with techniques described herein, the first transmitting UE, the second transmitting UE, or both may determine that a half-duplex collision has occurred. For example, one or more both of the UEs may receive a collision indication 320-c, or on or both of the UEs may receive multiple feedback messages in overlapping resources. Accordingly, one or both of the UEs may determine to retransmit a corresponding sidelink shared channel signal 310. For example, the first transmitting UE may determine to retransmit a first sidelink shared channel signal 310 in resources 305-i and the second transmitting UE may determine to retransmit a second sidelink shared channel signal 310 in resources 305-j.

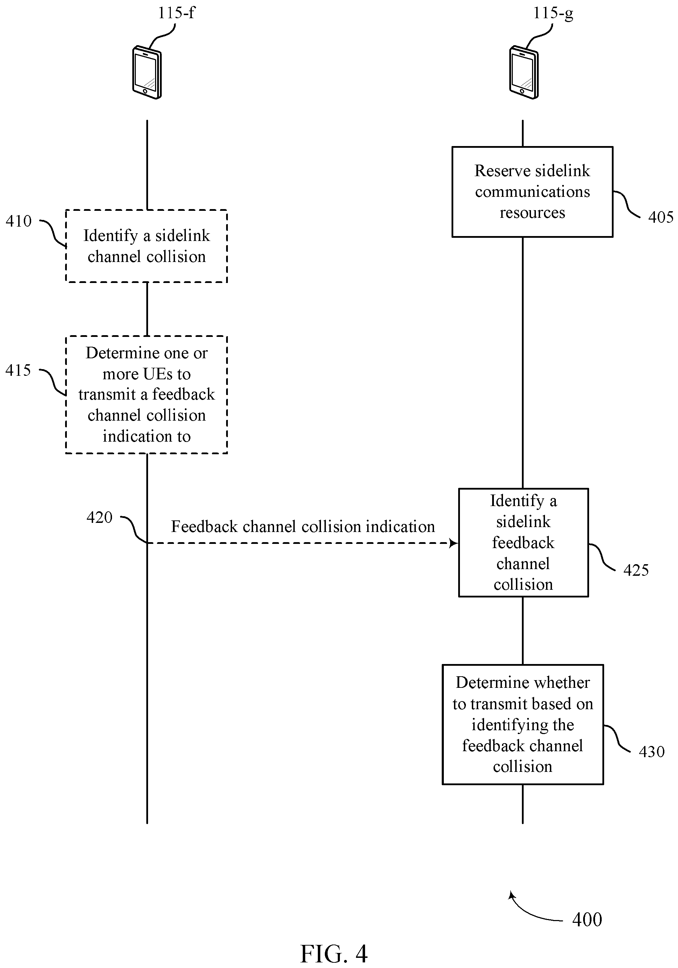

FIG. 4 illustrates an example of a process flow 400 that supports techniques for coordinating sidelink feedback channel resources in accordance with aspects of the present disclosure. The process flow 400 may illustrate an example feedback channel collision detection procedure. In some cases, the process flow 400 may illustrate a pre-collision detection procedure. For example, UE 115-f or UE 115-g, or both may perform a feedback channel collision procedure. UE 115-f may be referred to as a detecting UE 115 (e.g., a third-party UE 115 and UE 115-g may be referred to as a transmitting UE 115 (e.g., a UE 115 that may receive or has received a feedback channel collision). UEs 115-f, and 115-g, may be examples of the corresponding wireless devices described with reference to FIGs. 1 through 3. In some cases, instead of UEs 115-f and 115-g implementing the collision detection procedure, a different type of wireless device (e.g., a base station) may perform the same or similar procedures described herein. Alternative examples of the following may be implemented, where some steps are performed in a different order than described or are not performed at all. In some cases, steps may include additional features not mentioned below, or further steps may be added.

At 405, UE 115-g may reserve, via a SCI transmission, a set of sidelink communication resources for a first sidelink transmission by UE 115-g.

In some cases, UE 115-g may transmit to one or more neighboring UEs 115, such as UE 115-f, a request for the one or more neighboring UEs 115 to monitor for sidelink feedback channel collisions based on a comparison of the first sidelink transmission to one or more thresholds. UE 115-g may determine to transmit the request to the one or more neighboring UEs 115 based on a number of re-transmissions of the first sidelink transmission being less than a re-transmission threshold. UE 115-g may determine to transmit the request to the one or more neighboring UEs 115 based on a packet priority of the first sidelink transmission being greater than a priority threshold. UE 115-g may determine to transmit the request to the one or more neighboring UEs 115 based on a number of re-transmissions of the first sidelink transmission within a time interval being greater than a re-transmission threshold. UE 115-g may determine to transmit the request to the one or more neighboring UEs 115 based on a CBR of the first sidelink transmission being greater than a CBR threshold. UE 115-g may receive an indication of the one or more thresholds, where the indication may be included in radio resource control signaling, medium access control signaling, downlink control information signaling, or a combination thereof. UE 115-g may transmit the request per application, per sidelink transmission, per UE granularity, or a combination thereof. UE 115-g may include the request in radio resource control signaling, medium access control signaling, SCI signaling, or a combination thereof. Additionally, UE 115-g may transmit an indication of a destination identifier, a source identifier, a resource reservation, or a combination thereof associated with the first sidelink transmission.

Receiving the request by UE 115-f may include, receiving an indication of a source identifier associated with UE 115-g, a destination identifier, a resource reservation, a groupcast type, or a combination thereof associated with the first sidelink feedback transmission. UE 115-f may receive an SCI signal, a medium access control element signal, or both including the request.

In some cases, at 410, UE 115-f may identify a sidelink feedback channel collision arising from a first sidelink feedback transmission to UE 115-g and a second sidelink feedback transmission to a second UE 115 sharing same feedback channel resources. In some cases, UE 11-f may calculate a first set of resources associated with the first sidelink feedback transmission and a second set of resources associated with the second sidelink feedback transmission, and determine a collision of the first sidelink feedback transmission and the second sidelink feedback transmission based on the calculation. Calculating the first set of resources and the second set of resources may be based on a source identifier, a destination identifier, a groupcast type, or a combination thereof associated with the respective UEs 115.

In some cases, at 415, UE 115-f may determine based on identification of the sidelink feedback channel collision, one or more UEs 115 to which a sidelink feedback channel collision indication is to be transmitted. The determination may be based on a set of thresholds. UE 115-f may receive an indication of a distance threshold, RSRP threshold, a packet priority threshold, or a combination thereof for use in identification of the sidelink feedback channel collision.

For example, UE 115-f may determine a first relative position of UE 115-g to UE 115-f and a second relative position of the second UE 115 to UE 115-f, wherein determining the one or more UEs 115 to transmit the sidelink feedback channel collision indication to may be based on the first relative position and the second relative position. Accordingly, UE 115-f may compare the first relative position to a distance threshold and the second relative position to the distance threshold, and determine to transmit the sidelink feedback channel collision indication to UE 115-g, the second UE 115, or both based on the first relative position, the second relative position, or both, respectively, being less than the distance threshold. In some cases, UE 115-f may determine a lowest relative position between the first relative position and the second relative position, and determine to transmit the sidelink feedback channel collision indication to UE 115-g or the second UE 115 based on UE 115-g or the second UE 115, respectively, being associated with the lowest relative position.

In another example, UE 115-f may determine a first RSRP associated with UE 115-g and a second RSRP associated with the second UE 115, where determining the one or more UEs 115 to transmit the sidelink feedback channel collision indication to may be based on the first RSRP and the second RSRP. Accordingly, UE 115-f may compare the first RSRP to a RSRP threshold and the second RSRP to the RSRP threshold. UE 115-f may determine to transmit the sidelink feedback channel collision indication to UE 115-g, the second UE 115, or both based on the first RSRP, the second RSRP, or both, respectively, being greater than the RSRP threshold. In some cases, UE 1 15-f may determine a highest RSRP between the first RSRP and the second RSRP, and determine to transmit the sidelink feedback channel collision indication to UE 115-g or the second UE 115 based on UE 115-g, or the second UE 115, respectively, being associated with the highest RSRP. In some cases, determining the one or more UEs based on RSRP is due to a lack of relative positioning information of each of the UEs 115 at UE 115-f.

In another example, UE 115-f may identify a first SCI message associated with the first sidelink feedback transmission at a first occasion, and identify a second SCI message associated with the second sidelink feedback transmission at a second occasion. UE 115-f may determine to transmit the sidelink feedback channel collision indication to the second UE 115 based on receiving the second SCI message after the first SCI message. UE 115-f may transmit the sidelink feedback channel collision indication after the second SCI message and before a same time resource associated with the first sidelink feedback transmission and the second sidelink feedback transmission.

In another example, UE 115-f may determine a first packet priority associated with the first sidelink feedback transmission and a second packet priority associated with the second sidelink feedback transmission, where determining the one or more UEs to transmit the sidelink feedback channel collision indication to is based on the first packet priority. In some implementations, UE 115-f may determine that the collision indication type is pre-collision and that the first packet priority is lower than the second packet priority. Accordingly, UE 115-f may determine to transmit the sidelink feedback channel collision indication to UE 115-g based on UE 115-g being associated with the lower packet priority. In some implementations, UE 115-f may determine that the collision indication type is post-collision and that the first packet priority is higher than the second packet priority. Accordingly, UE 115-f may determine to transmit the sidelink feedback channel collision indication to UE 115-g based on UE 115-g being associated with the higher packet priority.

In another example, UE 115-f may determine that the first sidelink feedback transmission is associated with a re-transmission of a first sidelink shared channel from UE 115-g and the second sidelink feedback transmission is associated with an initial transmission of a second sidelink shared channel from the second UE 115. Accordingly, UE 115-f may determine to transmit the sidelink feedback channel collision indication to the second UE 115 based on the second sidelink feedback transmission being the initial transmission of the second sidelink shared channel.

In some cases, at 420, UE 115-f may transmit based on the identification of the sidelink feedback channel collision, the sidelink feedback channel collision indication to the one or more UEs 115. In some cases, UE 115-f may transmit a NACK to the one or more UEs 115, where the NACK may indicate the sidelink feedback channel collision indication. In some cases, UE 115-f may transmit, to the one or more UEs 115, an indication of a feedback channel resource mapping rule for the one or more UEs 115 to use, where the feedback channel resource mapping rule may indicate the sidelink feedback channel collision indication. The sidelink feedback channel collision indication may include an indication for the one or more UEs 115 to refrain from transmitting the respective sidelink transmission to avoid a collision.

At 425, UE 115-g may identify a sidelink feedback channel collision involving a first sidelink feedback transmission associated with the first sidelink transmission and a second sidelink feedback transmission associated with a second sidelink transmission by a second UE 115. The sidelink feedback channel collision may arise from the first sidelink feedback transmission and the second sidelink feedback transmission sharing same feedback channel resources. UE 115-f may identify the collision based on receiving a collision indication (e.g., a NACK, resource mapping rule), such as from UE 115-f.

At 430, UE 115-g may determine whether to transmit the first sidelink transmission based on the sidelink feedback channel collision being identified. In some cases, UE 115-f may determine to transmit the first sidelink transmission in a second set of sidelink communication resources in accordance with the feedback channel resource mapping rule. In some cases, UE 115-g may determine, before the sidelink feedback channel collision, to refrain from transmitting the first sidelink transmission in the set of sidelink communication resources to avoid the sidelink feedback channel collision. UE 115-g may transmit the first sidelink transmission based at least in part on the sidelink feedback channel collision being identified, where the transmission may include a request for one or more recipient UEs 115 to transmit ACK and NACK feedback in response to the transmission.

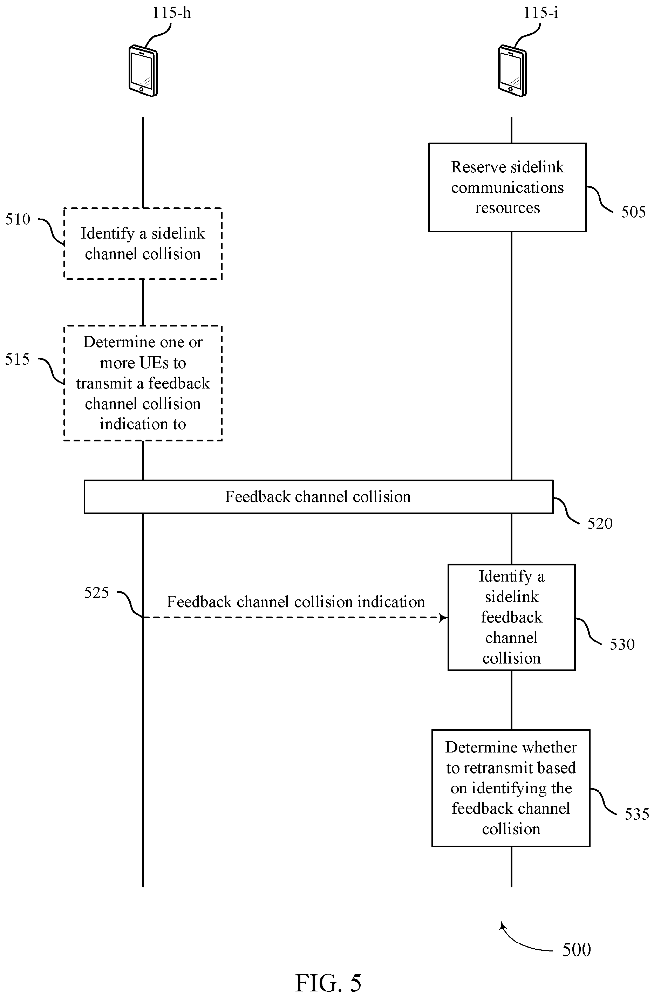

**FIG.** 5 illustrates an example of a process flow 500 that supports techniques for coordinating sidelink feedback channel resources in accordance with aspects of the present disclosure. The process flow 500 may illustrate an example feedback channel collision detection procedure. In some cases, the process flow 500 may illustrate a post-collision detection procedure. For example, UE 115-h or UE 115-i, or both may perform a feedback channel collision procedure. UE 115-h may be referred to as a detecting UE 115 (e.g., a third-party UE 115 and UE 115-i may be referred to as a transmitting UE 115 (e.g., a UE 115 that may receive or has received a feedback channel collision). UEs 115-h, and 115-i, may be examples of the corresponding wireless devices described with reference to FIGs. 1 through 4. For example, UEs 115-h and 115-i may perform the same or similar procedures described for pre-collision detection with reference to FIG. 4, for post-collision detection. In some cases, instead of UEs 115-h and 115-i implementing the collision detection procedure, a different type of wireless device (e.g., a base station) may perform the same or similar procedures described herein. Alternative examples of the following may be implemented, where some steps are performed in a different order than described or are not performed at all. In some cases, steps may include additional features not mentioned below, or further steps may be added.

At 505, UE 115-i may reserve, via a SCI transmission, a set of sidelink communication resources for a first sidelink transmission by UE 115-i. In some cases, UE 115-i may transmit to one or more neighboring UEs 115, such as UE 115-h, a request for the one or more neighboring UEs 115 to monitor for sidelink feedback channel collisions based on a comparison of the first sidelink transmission to one or more thresholds.

In some cases, at 510, UE 115-h may identify a sidelink feedback channel collision arising from a first sidelink feedback transmission to UE 115-i and a second sidelink feedback transmission to a second UE 115 sharing same feedback channel resources.

In some cases, at 415, UE 115-h may determine based on identification of the sidelink feedback channel collision, one or more UEs 115 to which a sidelink feedback channel collision indication is to be transmitted. The determination may be based on a set of thresholds. UE 115-h may receive an indication of a distance threshold, RSRP threshold, a packet priority threshold, or a combination thereof for use in identification of the sidelink feedback channel collision.

At 520, a collision of multiple sidelink feedback channels may occur. In some cases, UE 115-h may detect the collision before it occurs, or after it occurs.

In some cases, at 525, UE 115-h may transmit based on the identification of the sidelink feedback channel collision, the sidelink feedback channel collision indication to the one or more UEs 115. In some cases, UE 115-h may transmit the feedback channel collision indication to the one or more UEs 115 before the collision occurs or after.

At 530, UE 115-i may identify a sidelink feedback channel collision involving a first sidelink feedback transmission associated with the first sidelink transmission and a second sidelink feedback transmission associated with a second sidelink transmission by a second UE 115. The sidelink feedback channel collision may arise from the first sidelink feedback transmission and the second sidelink feedback transmission sharing same feedback channel resources. UE 115-h may identify the collision based on receiving a collision indication (e.g., a NACK, resource mapping rule), such as from UE 115-h.

At 535, UE 115-i may determine whether to retransmit the first sidelink transmission based on the sidelink feedback channel collision being identified. In some cases, UE 115-i may determine to retransmit the first sidelink transmission in a second set of sidelink communication resources in accordance with the feedback channel resource mapping rule (e.g., indicated to UE 115-i by UE 115-h). UE 115-i may retransmit the first sidelink transmission based on the sidelink feedback channel collision being identified, where the re-transmission may include a request for one or more recipient UEs 115 to transmit ACK and NACK feedback in response to the re-transmission.

In some cases, UE 115-i may receive a ACK and a NACK in the same feedback channel resources, where UE 115-i may identify the sidelink feedback channel collision based on receiving the ACK and the NACK. UE 115-i may determine whether to retransmit the first sidelink transmission in response to the ACK or the NACK based on one or more parameters.

For example, UE 115-i may retransmit the first sidelink transmission in accordance with the NACK based on a priority of the first sidelink transmission being greater than a priority threshold, a CBR of the first sidelink transmission being less than a CBR threshold, a PDB of the first sidelink transmission being greater than a PDB threshold, a number of retransmissions of the first sidelink transmission, or a combination thereof. In another example, UE 115-i may refrain from re-transmitting the first sidelink transmission in accordance with the ACK based on a priority of the first sidelink transmission being less than a priority threshold, a CBR of the first sidelink transmission being greater than a CBR threshold, a PDB of the first sidelink transmission being less than a PDB threshold, a number of retransmissions of the first sidelink transmission, or a combination thereof.

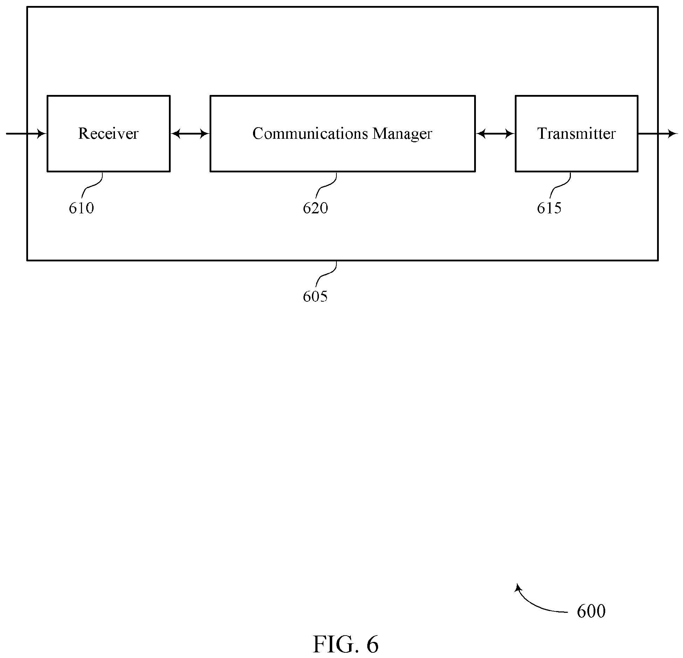

**FIG.** 6 shows a block diagram 600 of a device 605 that supports techniques for coordinating sidelink feedback channel resources in accordance with aspects of the present disclosure. The device 605 may be an example of aspects of a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to techniques for coordinating sidelink feedback channel resources). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to techniques for coordinating sidelink feedback channel resources). In some examples, the transmitter 615 may be co-located with a receiver 610 in a transceiver module. The transmitter 615 may utilize a single antenna or a set of multiple antennas.

The communications manager 620, the receiver 610, the transmitter 615, or various combinations thereof or various components thereof may be examples of means for performing various aspects of techniques for coordinating sidelink feedback channel resources as described herein. For example, the communications manager 620, the receiver 610, the transmitter 615, or various combinations or components thereof may support a method for performing one or more of the functions described herein.

In some examples, the communications manager 620, the receiver 610, the transmitter 615, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 620, the receiver 610, the transmitter 615, or various combinations or components thereof may be implemented in code (e.g., as communications management software or firmware) executed by a processor. If implemented in code executed by a processor, the functions of the communications manager 620, the receiver 610, the transmitter 615, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 620 may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communications at a detecting UE in accordance with examples as disclosed herein. For example, the communications manager 620 may be configured as or otherwise support a means for identifying a sidelink feedback channel collision arising from a first sidelink feedback transmission to a first UE and a second sidelink feedback transmission to a second UE sharing same feedback channel resources. The communications manager 620 may be configured as or otherwise support a means for determining, based on identification of the sidelink feedback channel collision, one or more UEs to which a sidelink feedback channel collision indication is to be transmitted. The communications manager 620 may be configured as or otherwise support a means for transmitting, based on the identification of the sidelink feedback channel collision, the sidelink feedback channel collision indication to the one or more UEs.

Additionally or alternatively, the communications manager 620 may support wireless communications at a first UE in accordance with examples as disclosed herein. For example, the communications manager 620 may be configured as or otherwise support a means for reserving, via a SCI transmission, a set of sidelink communication resources for a first sidelink transmission by the first UE. The communications manager 620 may be configured as or otherwise support a means for identifying a sidelink feedback channel collision involving a first sidelink feedback transmission associated with the first sidelink transmission and a second sidelink feedback transmission associated with a second sidelink transmission by a second UE, where the sidelink feedback channel collision arises from the first sidelink feedback transmission and the second sidelink feedback transmission sharing same feedback channel resources. The communications manager 620 may be configured as or otherwise support a means for determining to transmit or retransmit the first sidelink transmission based on the sidelink feedback channel collision being identified.

By including or configuring the communications manager 620 in accordance with examples as described herein, the device 605 (e.g., a processor controlling or otherwise coupled to the receiver 610, the transmitter 615, the communications manager 620, or a combination thereof) may support techniques for more efficient utilization of communication resources.

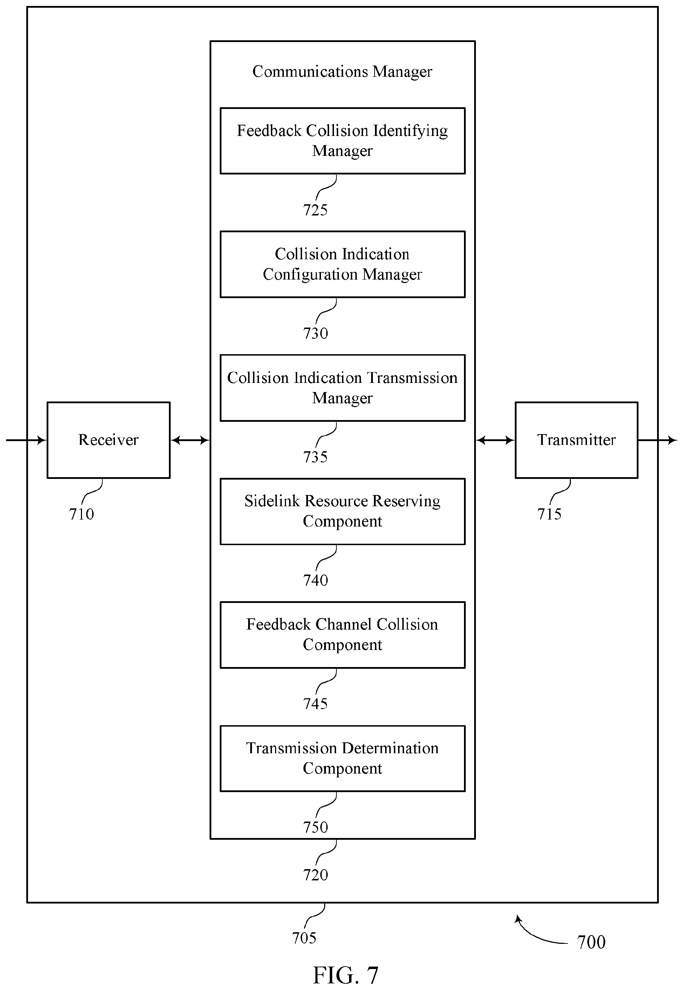

**FIG.** 7 shows a block diagram 700 of a device 705 that supports techniques for coordinating sidelink feedback channel resources in accordance with aspects of the present disclosure. The device 705 may be an example of aspects of a device 605 or a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to techniques for coordinating sidelink feedback channel resources). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to techniques for coordinating sidelink feedback channel resources). In some examples, the transmitter 715 may be co-located with a receiver 710 in a transceiver module. The transmitter 715 may utilize a single antenna or a set of multiple antennas.

The device 705, or various components thereof, may be an example of means for performing various aspects of techniques for coordinating sidelink feedback channel resources as described herein. For example, the communications manager 720 may include a feedback collision identifying manager 725, a collision indication configuration manager 730, a collision indication transmission manager 735, a sidelink resource reserving component 740, a feedback channel collision component 745, a transmission determination component 750, or any combination thereof. The communications manager 720 may be an example of aspects of a communications manager 620 as described herein. In some examples, the communications manager 720, or various components thereof, may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communications at a detecting UE in accordance with examples as disclosed herein. The feedback collision identifying manager 725 may be configured as or otherwise support a means for identifying a sidelink feedback channel collision arising from a first sidelink feedback transmission to a first UE and a second sidelink feedback transmission to a second UE sharing same feedback channel resources. The collision indication configuration manager 730 may be configured as or otherwise support a means for determining, based on identification of the sidelink feedback channel collision, one or more UEs to which a sidelink feedback channel collision indication is to be transmitted. The collision indication transmission manager 735 may be configured as or otherwise support a means for transmitting, based on the identification of the sidelink feedback channel collision, the sidelink feedback channel collision indication to the one or more UEs.

Additionally or alternatively, the communications manager 720 may support wireless communications at a first UE in accordance with examples as disclosed herein. The sidelink resource reserving component 740 may be configured as or otherwise support a means for reserving, via a SCI transmission, a set of sidelink communication resources for a first sidelink transmission by the first UE. The feedback channel collision component 745 may be configured as or otherwise support a means for identifying a sidelink feedback channel collision involving a first sidelink feedback transmission associated with the first sidelink transmission and a second sidelink feedback transmission associated with a second sidelink transmission by a second UE, where the sidelink feedback channel collision arises from the first sidelink feedback transmission and the second sidelink feedback transmission sharing same feedback channel resources. The transmission determination component 750 may be configured as or otherwise support a means for determining to transmit or retransmit the first sidelink transmission based on the sidelink feedback channel collision being identified.

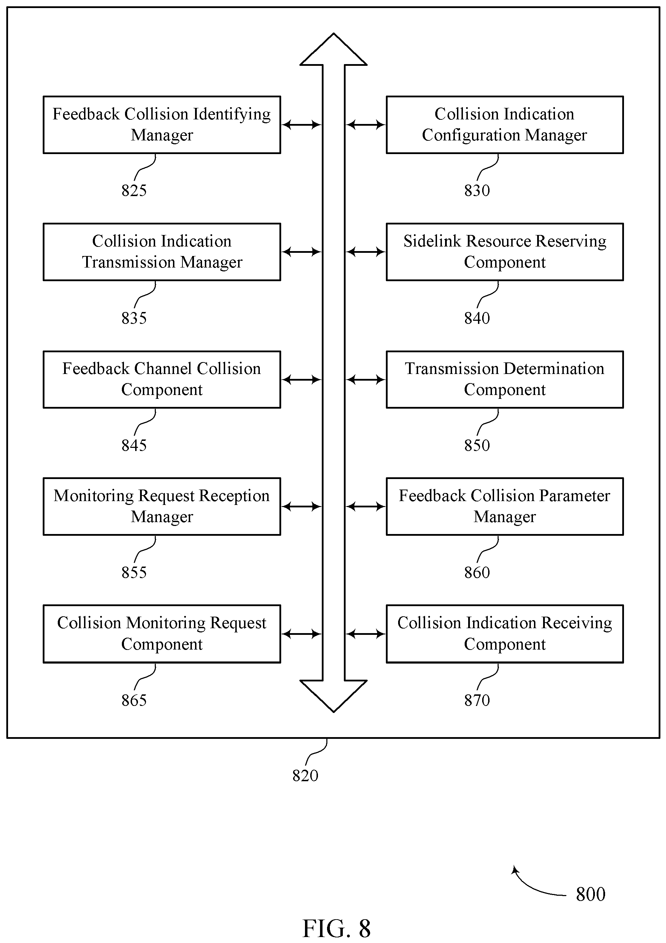

**FIG. 8** shows a block diagram 800 of a communications manager 820 that supports techniques for coordinating sidelink feedback channel resources in accordance with aspects of the present disclosure. The communications manager 820 may be an example of aspects of a communications manager 620, a communications manager 720, or both, as described herein. The communications manager 820, or various components thereof, may be an example of means for performing various aspects of techniques for coordinating sidelink feedback channel resources as described herein. For example, the communications manager 820 may include a feedback collision identifying manager 825, a collision indication configuration manager 830, a collision indication transmission manager 835, a sidelink resource reserving component 840, a feedback channel collision component 845, a transmission determination component 850, a monitoring request reception manager 855, a feedback collision parameter manager 860, a collision monitoring request component 865, a collision indication receiving component 870, or any combination thereof. Each of these components may communicate, directly or indirectly, with one another (e.g., via one or more buses).

The communications manager 820 may support wireless communications at a detecting UE in accordance with examples as disclosed herein. The feedback collision identifying manager 825 may be configured as or otherwise support a means for identifying a sidelink feedback channel collision arising from a first sidelink feedback transmission to a first UE and a second sidelink feedback transmission to a second UE sharing same feedback channel resources. The collision indication configuration manager 830 may be configured as or otherwise support a means for determining, based on identification of the sidelink feedback channel collision, one or more UEs to which a sidelink feedback channel collision indication is to be transmitted. The collision indication transmission manager 835 may be configured as or otherwise support a means for transmitting, based on the identification of the sidelink feedback channel collision, the sidelink feedback channel collision indication to the one or more UEs.

In some examples, the monitoring request reception manager 855 may be configured as or otherwise support a means for receiving, from at least the first UE, a request to monitor for possible collisions between sidelink feedback channels and the first sidelink feedback transmission.

In some examples, to support receiving the request, the monitoring request reception manager 855 may be configured as or otherwise support a means for receiving an indication of a source identifier associated with the first UE, a destination identifier, a resource reservation, a groupcast type, or a combination thereof associated with the first sidelink feedback transmission.

In some examples, to support receiving the request, the monitoring request reception manager 855 may be configured as or otherwise support a means for receiving a SCI signal, a medium access control element signal, or both including the request.

In some examples, the collision indication configuration manager 830 may be configured as or otherwise support a means for determining a first relative position of the first UE to the detecting UE and a second relative position of the second UE to the detecting UE, where determining the one or more UEs to transmit the sidelink feedback channel collision indication to is based on the first relative position and the second relative position.

In some examples, to support determining the one or more UEs, the collision indication configuration manager 830 may be configured as or otherwise support a means for comparing the first relative position to a distance threshold and the second relative position to the distance threshold. In some examples, to support determining the one or more UEs, the collision indication configuration manager 830 may be configured as or otherwise support a means for determining to transmit the sidelink feedback channel collision indication to the first UE, the second UE, or both based on the first relative position, the second relative position, or both, respectively, being less than the distance threshold, the one or more UEs including the first UE, the second UE, or both.

In some examples, to support determining the one or more UEs, the collision indication configuration manager 830 may be configured as or otherwise support a means for determining a lowest relative position between the first relative position and the second relative position. In some examples, to support determining the one or more UEs, the collision indication configuration manager 830 may be configured as or otherwise support a means for determining to transmit the sidelink feedback channel collision indication to the first UE or the second UE based on the first UE or the second UE, respectively, being associated with the lowest relative position, the one or more UEs including the first UE, or the second UE.

**In** some examples, the collision indication configuration manager 830 may be configured as or otherwise support a means for determining a first reference signal received power associated with the first UE and a second reference signal received power associated with the second UE, where determining the one or more UEs to transmit the sidelink feedback channel collision indication to is based on the first reference signal received power and the second reference signal received power.

**In** some examples, to support determining the one or more UEs, the collision indication configuration manager 830 may be configured as or otherwise support a means for comparing the first reference signal received power to a reference signal received power threshold and the second reference signal received power to the reference signal received power threshold. In some examples, to support determining the one or more UEs, the collision indication configuration manager 830 may be configured as or otherwise support a means for determining to transmit the sidelink feedback channel collision indication to the first UE, the second UE, or both based on the first reference signal received power, the second reference signal received power, or both, respectively, being greater than the reference signal received power threshold, the one or more UEs including the first UE, the second UE, or both.

**In** some examples, to support determining the one or more UEs, the collision indication configuration manager 830 may be configured as or otherwise support a means for determining a highest reference signal received power between the first reference signal received power and the second reference signal received power. In some examples, to support determining the one or more UEs, the collision indication configuration manager 830 may be configured as or otherwise support a means for determining to transmit the sidelink feedback channel collision indication to the first UE or the second UE based on the first UE, or the second UE, respectively, being associated with the highest reference signal received power, the one or more UEs including the first UE, or the second UE.

In some examples, determining the one or more UEs based on reference signal received power is due to a lack of relative positioning information of each of the UEs at the detecting UE.

In some examples, to support determining the one or more UEs, the collision indication configuration manager 830 may be configured as or otherwise support a means for identifying a first SCI message associated with the first sidelink feedback transmission at a first occasion. In some examples, to support determining the one or more UEs, the collision indication configuration manager 830 may be configured as or otherwise support a means for identifying a second SCI message associated with the second sidelink feedback transmission at a second occasion. In some examples, to support determining the one or more UEs, the collision indication configuration manager 830 may be configured as or otherwise support a means for determining to transmit the sidelink feedback channel collision indication to the second UE based on receiving the second SCI message after the first SCI message, the one or more UEs including the second UE.

In some examples, to support transmitting the sidelink feedback channel collision indication, the collision indication configuration manager 830 may be configured as or otherwise support a means for transmitting the sidelink feedback channel collision indication after the second SCI message and before a same time resource associated with the first sidelink feedback transmission and the second sidelink feedback transmission.

In some examples, the collision indication configuration manager 830 may be configured as or otherwise support a means for determining a first packet priority associated with the first sidelink feedback transmission and a second packet priority associated with the second sidelink feedback transmission, where determining the one or more UEs to transmit the sidelink feedback channel collision indication to is based on the first packet priority, the second packet priority, and a collision indication type.

In some examples, to support determining the one or more UEs, the collision indication configuration manager 830 may be configured as or otherwise support a means for determining that the collision indication type is pre-collision and that the first packet priority is lower than the second packet priority. In some examples, to support determining the one or more UEs, the collision indication configuration manager 830 may be configured as or otherwise support a means for determining to transmit the sidelink feedback channel collision indication to the first UE based on the first UE being associated with the lower packet priority, the one or more UEs including the first UE.

**In** some examples, to support determining the one or more UEs, the collision indication configuration manager 830 may be configured as or otherwise support a means for determining that the collision indication type is post-collision and that the first packet priority is higher than the second packet priority. In some examples, to support determining the one or more UEs, the collision indication configuration manager 830 may be configured as or otherwise support a means for determining to transmit the sidelink feedback channel collision indication to the first UE based on the first UE being associated with the higher packet priority, the one or more UEs including the first UE.

**In** some examples, the feedback collision identifying manager 825 may be configured as or otherwise support a means for calculating a first set of resources associated with the first sidelink feedback transmission and a second set of resources associated with the second sidelink feedback transmission. In some examples, the feedback collision identifying manager 825 may be configured as or otherwise support a means for determining a collision of the first sidelink feedback transmission and the second sidelink feedback transmission based on the calculation.

**In** some examples, calculating the first set of resources and the second set of resources is based on a source identifier, a destination identifier, a groupcast type, or a combination thereof associated with the respective UEs.

**In** some examples, to support transmitting the sidelink feedback channel collision indication, the collision indication transmission manager 835 may be configured as or otherwise support a means for transmitting the sidelink feedback channel collision indication after a collision of the first sidelink feedback transmission and the second sidelink feedback transmission.

**In** some examples, to support determining the one or more UEs, the collision indication configuration manager 830 may be configured as or otherwise support a means for determining that the first sidelink feedback transmission is associated with a re-transmission of a first sidelink shared channel from the first UE and the second sidelink feedback transmission is associated with an initial transmission of a second sidelink shared channel from the second UE. In some examples, to support determining the one or more UEs, the collision indication configuration manager 830 may be configured as or otherwise support a means for determining to transmit the sidelink feedback channel collision indication to the second UE based on the second sidelink feedback transmission being the initial transmission of the second sidelink shared channel.

In some examples, to support transmitting the sidelink feedback channel collision indication, the collision indication configuration manager 830 may be configured as or otherwise support a means for transmitting a negative acknowledgment to the one or more UEs, the negative acknowledgment including the sidelink feedback channel collision indication.

In some examples, to support transmitting the sidelink feedback channel collision indication, the collision indication configuration manager 830 may be configured as or otherwise support a means for transmitting, to the one or more UEs, an indication of a feedback channel resource mapping rule for the one or more UEs to use, the feedback channel resource mapping rule including the sidelink feedback channel collision indication.

In some examples, the sidelink feedback channel collision indication includes an indication for the one or more UEs to re-transmit a respective sidelink transmission that collided or to refrain from transmitting the respective sidelink transmission to avoid a collision.

In some examples, the feedback collision parameter manager 860 may be configured as or otherwise support a means for receiving an indication of a distance threshold, reference signal received power threshold, a packet priority threshold, or a combination thereof for use in identification of the sidelink feedback channel collision.

Additionally or alternatively, the communications manager 820 may support wireless communications at a first UE in accordance with examples as disclosed herein. The sidelink resource reserving component 840 may be configured as or otherwise support a means for reserving, via a SCI transmission, a set of sidelink communication resources for a first sidelink transmission by the first UE. The feedback channel collision component 845 may be configured as or otherwise support a means for identifying a sidelink feedback channel collision involving a first sidelink feedback transmission associated with the first sidelink transmission and a second sidelink feedback transmission associated with a second sidelink transmission by a second UE, where the sidelink feedback channel collision arises from the first sidelink feedback transmission and the second sidelink feedback transmission sharing same feedback channel resources. The transmission determination component 850 may be configured as or otherwise support a means for determining to transmit or retransmit the first sidelink transmission based on the sidelink feedback channel collision being identified.

**In** some examples, the collision monitoring request component 865 may be configured as or otherwise support a means for transmitting, to one or more neighboring UEs, a request for the one or more neighboring UEs to monitor for sidelink feedback channel collisions based on a comparison of the first sidelink transmission to one or more thresholds.

**In** some examples, the collision monitoring request component 865 may be configured as or otherwise support a means for determining to transmit the request to the one or more neighboring UEs based on a number of re-transmissions of the first sidelink transmission being less than a re-transmission threshold, the one or more thresholds including the re-transmission threshold.

**In** some examples, the collision monitoring request component 865 may be configured as or otherwise support a means for determining to transmit the request to the one or more neighboring UEs based on a packet priority of the first sidelink transmission being greater than a priority threshold, the one or more thresholds including the priority threshold.

**In** some examples, the collision monitoring request component 865 may be configured as or otherwise support a means for determining to transmit the request to the one or more neighboring UEs based on a number of re-transmissions of the first sidelink transmission within a time interval being greater than a re-transmission threshold, the one or more thresholds including the re-transmission threshold.

**In** some examples, the collision monitoring request component 865 may be configured as or otherwise support a means for determining to transmit the request to the one or more neighboring UEs based on a channel busy ratio of the first sidelink transmission being greater than a channel busy ratio threshold, the one or more thresholds including the channel busy ratio threshold.

**In** some examples, the collision monitoring request component 865 may be configured as or otherwise support a means for receiving an indication of the one or more thresholds, the indication included in radio resource control signaling, medium access control signaling, downlink control information signaling, or a combination thereof.

In some examples, to support transmitting the request, the collision monitoring request component 865 may be configured as or otherwise support a means for transmitting the request per application, per sidelink transmission, per UE granularity, or a combination thereof, where the request is included in radio resource control signaling, medium access control signaling, SCI signaling, or a combination thereof.

In some examples, to support transmitting the request, the collision monitoring request component 865 may be configured as or otherwise support a means for transmitting an indication of a destination identifier, a source identifier, a resource reservation, or a combination thereof associated with the first sidelink transmission.

In some examples, to support identifying the sidelink feedback channel collision, the collision indication receiving component 870 may be configured as or otherwise support a means for receiving a sidelink feedback channel collision indication, where identifying the sidelink feedback channel collision is based on the sidelink feedback channel collision indication.

In some examples, to support receiving the sidelink feedback channel collision indication, the collision indication receiving component 870 may be configured as or otherwise support a means for receiving a negative acknowledgment, the negative acknowledgment including the sidelink feedback channel collision indication.

In some examples, to support receiving the sidelink feedback channel collision indication, the collision indication receiving component 870 may be configured as or otherwise support a means for receiving an indication of a feedback channel resource mapping rule for the first UE to use, the feedback channel resource mapping rule including the sidelink feedback channel collision indication.

In some examples, to support determining to transmit or retransmit the first sidelink transmission, the transmission determination component 850 may be configured as or otherwise support a means for determining to transmit or retransmit the first sidelink transmission in a second set of sidelink communication resources in accordance with the feedback channel resource mapping rule.

In some examples, to support determining to transmit the first sidelink transmission, the transmission determination component 850 may be configured as or otherwise support a means for determining, before the sidelink feedback channel collision, to refrain from transmitting the first sidelink transmission in the set of sidelink communication resources to avoid the sidelink feedback channel collision.

In some examples, to support determining to transmit or retransmit the first sidelink transmission, the transmission determination component 850 may be configured as or otherwise support a means for determining, after the sidelink feedback channel collision, to re-transmit the first sidelink transmission based on the sidelink feedback channel collision occurring.

In some examples, the feedback channel collision component 845 may be configured as or otherwise support a means for receiving a positive acknowledgment and a negative acknowledgment in the same feedback channel resources, where identifying the sidelink feedback channel collision is based on receiving the positive acknowledgment and the negative acknowledgment. In some examples, the transmission determination component 850 may be configured as or otherwise support a means for determining whether to retransmit the first sidelink transmission in response to the positive acknowledgment or the negative acknowledgment based on one or more parameters.

In some examples, the transmission determination component 850 may be configured as or otherwise support a means for retransmitting the first sidelink transmission in accordance with the negative acknowledgment based on a priority of the first sidelink transmission being greater than a priority threshold, a channel busy ratio of the first sidelink transmission being less than a channel busy ratio threshold, a packet delay budget of the first sidelink transmission being greater than a packet delay budget threshold, a number of retransmissions of the first sidelink transmission, or a combination thereof.

**In** some examples, the transmission determination component 850 may be configured as or otherwise support a means for refraining from re-transmitting the first sidelink transmission in accordance with the positive acknowledgment based on a priority of the first sidelink transmission being less than a priority threshold, a channel busy ratio of the first sidelink transmission being greater than a channel busy ratio threshold, a packet delay budget of the first sidelink transmission being less than a packet delay budget threshold, a number of retransmissions of the first sidelink transmission, or a combination thereof.

In some examples, the transmission determination component 850 may be configured as or otherwise support a means for transmitting or retransmitting the first sidelink transmission based on the sidelink feedback channel collision being identified, where the transmission or the re-transmission includes a request for one or more recipient UEs to transmit positive acknowledgment and negative acknowledgment feedback in response to the transmission or the re-transmission.

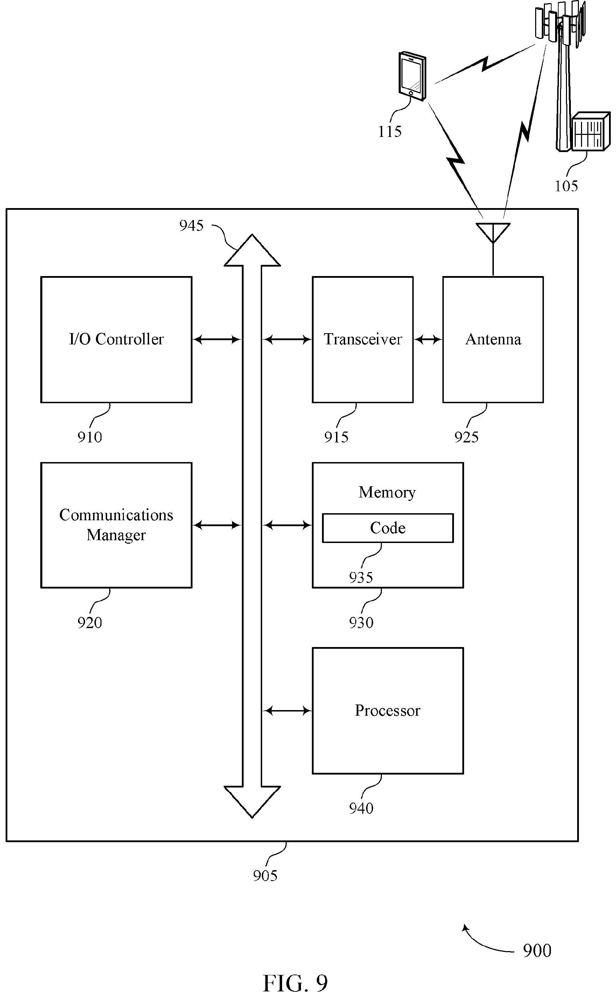

FIG. 9 shows a diagram of a system 900 including a device 905 that supports techniques for coordinating sidelink feedback channel resources in accordance with aspects of the present disclosure. The device 905 may be an example of or include the components of a device 605, a device 705, or a UE 115 as described herein. The device 905 may communicate wirelessly with one or more base stations 105, UEs 115, or any combination thereof. The device 905 may include components for bi-directional voice and data communications including components for transmitting and receiving communications, such as a communications manager 920, an input/output (I/O) controller 910, a transceiver 915, an antenna 925, a memory 930, code 935, and a processor 940. These components may be in electronic communication or otherwise coupled (e.g., operatively, communicatively, functionally, electronically, electrically) via one or more buses (e.g., a bus 945).

The I/O controller 910 may manage input and output signals for the device 905. The I/O controller 910 may also manage peripherals not integrated into the device 905. In some cases, the I/O controller 910 may represent a physical connection or port to an external peripheral. In some cases, the I/O controller 910 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 910 may represent or interact with a modem, a keyboard, a mouse, a touchscreen, or a similar device. In some cases, the I/O controller 910 may be implemented as part of a processor, such as the processor 940. In some cases, a user may interact with the device 905 via the I/O controller 910 or via hardware components controlled by the I/O controller 910.

In some cases, the device 905 may include a single antenna 925. However, in some other cases, the device 905 may have more than one antenna 925, which may be capable of concurrently transmitting or receiving multiple wireless transmissions. The transceiver 915 may communicate bi-directionally, via the one or more antennas 925, wired, or wireless links as described herein. For example, the transceiver 915 may represent a wireless transceiver and may communicate bi-directionally with another wireless transceiver. The transceiver 915 may also include a modem to modulate the packets, to provide the modulated packets to one or more antennas 925 for transmission, and to demodulate packets received from the one or more antennas 925. The transceiver 915, or the transceiver 915 and one or more antennas 925, may be an example of a transmitter 615, a transmitter 715, a receiver 610, a receiver 710, or any combination thereof or component thereof, as described herein.

The memory 930 may include random access memory (RAM) and read-only memory (ROM). The memory 930 may store computer-readable, computer-executable code 935 including instructions that, when executed by the processor 940, cause the device 905 to perform various functions described herein. The code 935 may be stored in a non-transitory computer-readable medium such as system memory or another type of memory. In some cases, the code 935 may not be directly executable by the processor 940 but may cause a computer (e.g., when compiled and executed) to perform functions described herein. In some cases, the memory 930 may contain, among other things, a basic I/O system (BIOS) which may control basic hardware or software operation such as the interaction with peripheral components or devices.

The processor 940 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In some other cases, a memory controller may be integrated into the processor 940. The processor 940 may be configured to execute computer-readable instructions stored in a memory (e.g., the memory 930) to cause the device 905 to perform various functions (e.g., functions or tasks supporting techniques for coordinating sidelink feedback channel resources). For example, the device 905 or a component of the device 905 may include a processor 940 and memory 930 coupled to the processor 940, the processor 940 and memory 930 configured to perform various functions described herein.

The communications manager 920 may support wireless communications at a detecting UE in accordance with examples as disclosed herein. For example, the communications manager 920 may be configured as or otherwise support a means for identifying a sidelink feedback channel collision arising from a first sidelink feedback transmission to a first UE and a second sidelink feedback transmission to a second UE sharing same feedback channel resources. The communications manager 920 may be configured as or otherwise support a means for determining, based on identification of the sidelink feedback channel collision, one or more UEs to which a sidelink feedback channel collision indication is to be transmitted. The communications manager 920 may be configured as or otherwise support a means for transmitting, based on the identification of the sidelink feedback channel collision, the sidelink feedback channel collision indication to the one or more UEs.

Additionally or alternatively, the communications manager 920 may support wireless communications at a first UE in accordance with examples as disclosed herein. For example, the communications manager 920 may be configured as or otherwise support a means for reserving, via a SCI transmission, a set of sidelink communication resources for a first sidelink transmission by the first UE. The communications manager 920 may be configured as or otherwise support a means for identifying a sidelink feedback channel collision involving a first sidelink feedback transmission associated with the first sidelink transmission and a second sidelink feedback transmission associated with a second sidelink transmission by a second UE, where the sidelink feedback channel collision arises from the first sidelink feedback transmission and the second sidelink feedback transmission sharing same feedback channel resources. The communications manager 920 may be configured as or otherwise support a means for determining to transmit or retransmit the first sidelink transmission based on the sidelink feedback channel collision being identified.

By including or configuring the communications manager 920 in accordance with examples as described herein, the device 905 may support techniques for improved communication reliability, reduced latency, more efficient utilization of communication resources, improved coordination between devices.

In some examples, the communications manager 920 may be configured to perform various operations (e.g., receiving, monitoring, transmitting) using or otherwise in cooperation with the transceiver 915, the one or more antennas 925, or any combination thereof. Although the communications manager 920 is illustrated as a separate component, in some examples, one or more functions described with reference to the communications manager 920 may be supported by or performed by the processor 940, the memory 930, the code 935, or any combination thereof. For example, the code 935 may include instructions executable by the processor 940 to cause the device 905 to perform various aspects of techniques for coordinating sidelink feedback channel resources as described herein, or the processor 940 and the memory 930 may be otherwise configured to perform or support such operations.

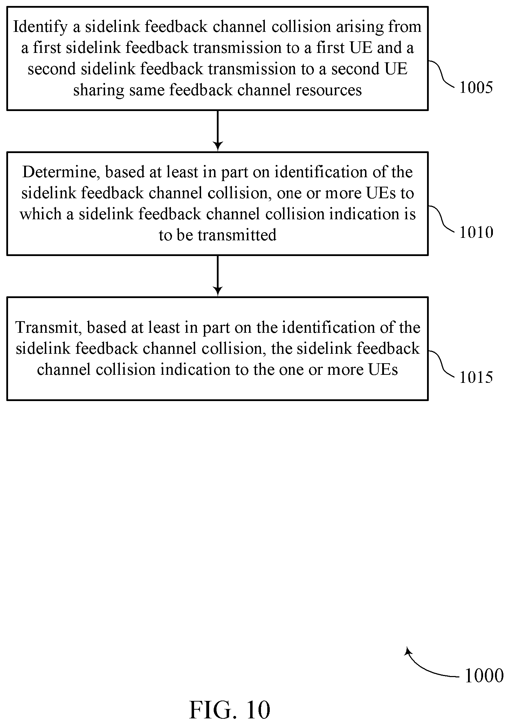

**FIG. 10** shows a flowchart illustrating a method 1000 that supports techniques for coordinating sidelink feedback channel resources in accordance with aspects of the present disclosure. The operations of the method 1000 may be implemented by a UE or its components as described herein. For example, the operations of the method 1000 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1005, the method may include identifying a sidelink feedback channel collision arising from a first sidelink feedback transmission to a first UE and a second sidelink feedback transmission to a second UE sharing same feedback channel resources. The operations of 1005 may be performed in accordance with examples as disclosed herein. In some examples, aspects of the operations of 1005 may be performed by a feedback collision identifying manager 825 as described with reference to FIG. 8.

At 1010, the method may include determining, based on identification of the sidelink feedback channel collision, one or more UEs to which a sidelink feedback channel collision indication is to be transmitted. The operations of 1010 may be performed in accordance with examples as disclosed herein. In some examples, aspects of the operations of 1010 may be performed by a collision indication configuration manager 830 as described with reference to FIG. 8.

At 1015, the method may include transmitting, based on the identification of the sidelink feedback channel collision, the sidelink feedback channel collision indication to the one or more UEs. The operations of 1015 may be performed in accordance with examples as disclosed herein. In some examples, aspects of the operations of 1015 may be performed by a collision indication transmission manager 835 as described with reference to FIG. 8.

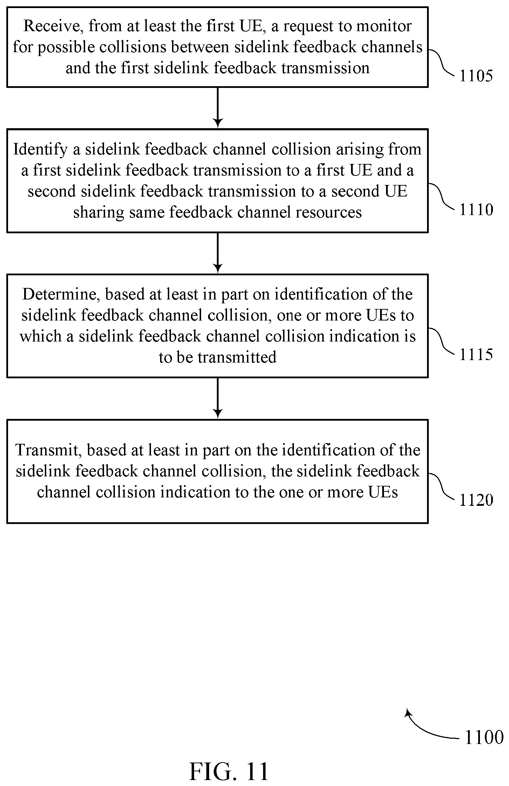

FIG. 11 shows a flowchart illustrating a method 1100 that supports techniques for coordinating sidelink feedback channel resources in accordance with aspects of the present disclosure. The operations of the method 1100 may be implemented by a UE or its components as described herein. For example, the operations of the method 1100 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1105, the method may include receiving, from at least the first UE, a request to monitor for possible collisions between sidelink feedback channels and the first sidelink feedback transmission. The operations of 1105 may be performed in accordance with examples as disclosed herein. In some examples, aspects of the operations of 1105 may be performed by a monitoring request reception manager 855 as described with reference to FIG. 8.

At 1110, the method may include identifying a sidelink feedback channel collision arising from a first sidelink feedback transmission to a first UE and a second sidelink feedback transmission to a second UE sharing same feedback channel resources. The operations of 1110 may be performed in accordance with examples as disclosed herein. In some examples, aspects of the operations of 1110 may be performed by a feedback collision identifying manager 825 as described with reference to FIG. 8.

At 1115, the method may include determining, based on identification of the sidelink feedback channel collision, one or more UEs to which a sidelink feedback channel collision indication is to be transmitted. The operations of 1115 may be performed in accordance with examples as disclosed herein. In some examples, aspects of the operations of 1115 may be performed by a collision indication configuration manager 830 as described with reference to FIG. 8.

At 1120, the method may include transmitting, based on the identification of the sidelink feedback channel collision, the sidelink feedback channel collision indication to the one or more UEs. The operations of 1120 may be performed in accordance with examples as disclosed herein. In some examples, aspects of the operations of 1120 may be performed by a collision indication transmission manager 835 as described with reference to FIG. 8.

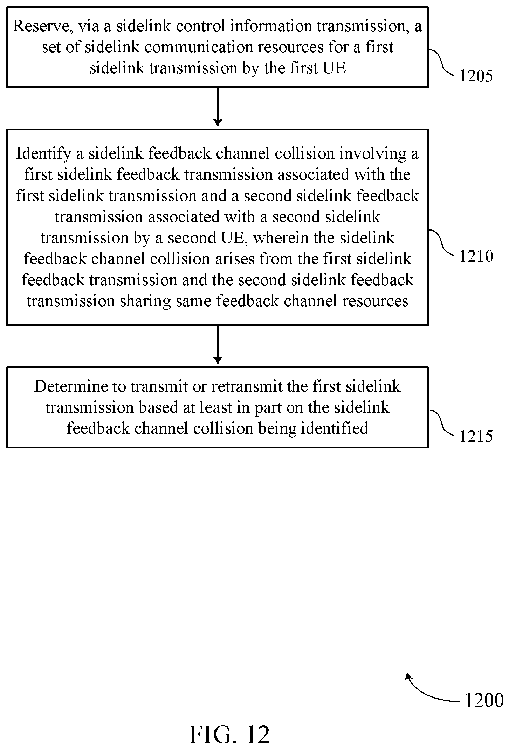

**FIG. 12** shows a flowchart illustrating a method 1200 that supports techniques for coordinating sidelink feedback channel resources in accordance with aspects of the present disclosure. The operations of the method 1200 may be implemented by a UE or its components as described herein. For example, the operations of the method 1200 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1205, the method may include reserving, via a SCI transmission, a set of sidelink communication resources for a first sidelink transmission by the first UE. The operations of 1205 may be performed in accordance with examples as disclosed herein. In some examples, aspects of the operations of 1205 may be performed by a sidelink resource reserving component 840 as described with reference to FIG. 8.

At 1210, the method may include identifying a sidelink feedback channel collision involving a first sidelink feedback transmission associated with the first sidelink transmission and a second sidelink feedback transmission associated with a second sidelink transmission by a second UE, where the sidelink feedback channel collision arises from the first sidelink feedback transmission and the second sidelink feedback transmission sharing same feedback channel resources. The operations of 1210 may be performed in accordance with examples as disclosed herein. In some examples, aspects of the operations of 1210 may be performed by a feedback channel collision component 845 as described with reference to FIG. 8.

At 1215, the method may include determining to transmit or retransmit the first sidelink transmission based on the sidelink feedback channel collision being identified. The operations of 1215 may be performed in accordance with examples as disclosed herein. In some examples, aspects of the operations of 1215 may be performed by a transmission determination component 850 as described with reference to FIG. 8.

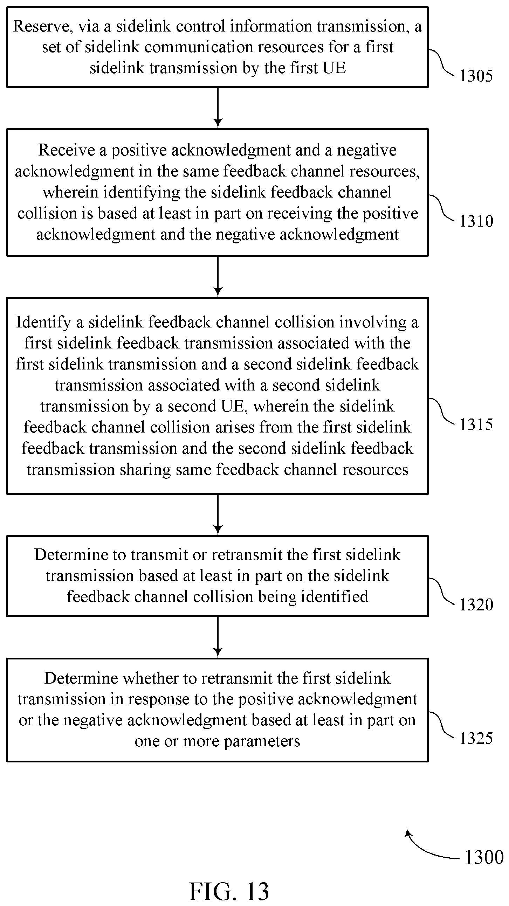

**FIG.** 13 shows a flowchart illustrating a method 1300 that supports techniques for coordinating sidelink feedback channel resources in accordance with aspects of the present disclosure. The operations of the method 1300 may be implemented by a UE or its components as described herein. For example, the operations of the method 1300 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1305, the method may include reserving, via a SCI transmission, a set of sidelink communication resources for a first sidelink transmission by the first UE. The operations of 1305 may be performed in accordance with examples as disclosed herein. In some examples, aspects of the operations of 1305 may be performed by a sidelink resource reserving component 840 as described with reference to FIG. 8.

At 1310, the method may include receiving a positive acknowledgment and a negative acknowledgment in the same feedback channel resources, where identifying the sidelink feedback channel collision is based on receiving the positive acknowledgment and the negative acknowledgment. The operations of 1310 may be performed in accordance with examples as disclosed herein. In some examples, aspects of the operations of 1310 may be performed by a feedback channel collision component 845 as described with reference to FIG. 8.

At 1315, the method may include identifying a sidelink feedback channel collision involving a first sidelink feedback transmission associated with the first sidelink transmission and a second sidelink feedback transmission associated with a second sidelink transmission by a second UE, where the sidelink feedback channel collision arises from the first sidelink feedback transmission and the second sidelink feedback transmission sharing same feedback channel resources. The operations of 1315 may be performed in accordance with examples as disclosed herein. In some examples, aspects of the operations of 1315 may be performed by a feedback channel collision component 845 as described with reference to FIG. 8.

At 1320, the method may include determining to transmit or retransmit the first sidelink transmission based on the sidelink feedback channel collision being identified. The operations of 1320 may be performed in accordance with examples as disclosed herein. In some examples, aspects of the operations of 1320 may be performed by a transmission determination component 850 as described with reference to FIG. 8.

At 1325, the method may include determining whether to retransmit the first sidelink transmission in response to the positive acknowledgment or the negative acknowledgment based on one or more parameters. The operations of 1325 may be performed in accordance with examples as disclosed herein. In some examples, aspects of the operations of 1325 may be performed by a transmission determination component 850 as described with reference to FIG. 8.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of invention defined by the appended claims.

## Claims

1. A method (1000) for wireless communications at a detecting user equipment, UE, comprising:
identifying (1005) a sidelink feedback channel collision arising from a first sidelink feedback transmission to a first UE and a second sidelink feedback transmission to a second UE sharing same feedback channel resources;
identifying (1010), based at least in part on identification of the sidelink feedback channel collision, one or more UEs including at least one of the first UE and the second UE to which a sidelink feedback channel collision indication is to be transmitted; and
transmitting (1015), based at least in part on the identification of the sidelink feedback channel collision, the sidelink feedback channel collision indication to the one or more UEs.

2. The method of claim 1, further comprising:
receiving, from at least the first UE, a request to monitor for possible collisions between sidelink feedback channels and the first sidelink feedback transmission.

3. The method of claim 1, further comprising:
determining a first relative position of the first UE to the detecting UE and a second relative position of the second UE to the detecting UE, wherein
determining the one or more UEs to transmit the sidelink feedback channel collision indication to is based at least in part on the first relative position and the second relative position,
preferably wherein determining the one or more UEs further comprises:
comparing the first relative position to a distance threshold and the second relative position to the distance threshold, and
determining to transmit the sidelink feedback channel collision indication to the first UE, the second UE, or both based at least in part on the first relative position, the second relative position, or both, respectively, being less than the distance threshold, the one or more UEs comprising the first UE, the second UE, or both;
or wherein determining the one or more UEs further comprises:
determining a lowest relative position between the first relative position and the second relative position, and
determining to transmit the sidelink feedback channel collision indication to the first UE or the second UE based at least in part on the first UE or the second UE, respectively, being associated with the lowest relative position, the one or more UEs comprising the first UE, or the second UE.

4. The method of claim 1, further comprising:
determining a first reference signal received power associated with the first UE and a second reference signal received power associated with the second UE,
wherein determining the one or more UEs to transmit the sidelink feedback channel collision indication to is based at least in part on the first reference signal received power and the second reference signal received power,
preferably wherein determining the one or more UEs further comprises:
comparing the first reference signal received power to a reference signal received power threshold and the second reference signal received power to the reference signal received power threshold, and
determining to transmit the sidelink feedback channel collision indication to the first UE, the second UE, or both based at least in part on the first reference signal received power, the second reference signal received power, or both, respectively, being greater than the reference signal received power threshold, the one or more UEs comprising the first UE, the second UE, or both;
or wherein determining the one or more UEs further comprises:
determining a highest reference signal received power between the first reference signal received power and the second reference signal received power; and
determining to transmit the sidelink feedback channel collision indication to the first UE or the second UE based at least in part on the first UE, or the second UE, respectively, being associated with the highest reference signal received power, the one or more UEs comprising the first UE, or the second UE.

5. The method of claim 1, wherein determining the one or more UEs further comprises:
identifying a first sidelink control information message associated with the first sidelink feedback transmission at a first occasion;
identifying a second sidelink control information message associated with the second sidelink feedback transmission at a second occasion; and
determining to transmit the sidelink feedback channel collision indication to the second UE based at least in part on receiving the second sidelink control information message after the first sidelink control information message, the one or more UEs comprising the second UE,
preferably wherein transmitting the sidelink feedback channel collision indication further comprises:
transmitting the sidelink feedback channel collision indication after the second sidelink control information message and before a same time resource associated with the first sidelink feedback transmission and the second sidelink feedback transmission.

6. The method of claim 1, further comprising:
determining a first packet priority associated with the first sidelink feedback transmission and a second packet priority associated with the second sidelink feedback transmission, wherein determining the one or more UEs to transmit the sidelink feedback channel collision indication to is based at least in part on the first packet priority, the second packet priority, and a collision indication type,
preferably wherein determining the one or more UEs further comprises:
determining that the collision indication type is pre-collision and that the first packet priority is lower than the second packet priority, and
determining to transmit the sidelink feedback channel collision indication to the first UE based at least in part on the first UE being associated with the lower packet priority, the one or more UEs comprising the first UE;
or wherein determining the one or more UEs further comprises:
determining that the collision indication type is post-collision and that the first packet priority is higher than the second packet priority; and
determining to transmit the sidelink feedback channel collision indication to the first UE based at least in part on the first UE being associated with the higher packet priority, the one or more UEs comprising the first UE.

7. The method of claim 1, wherein the method further comprises:
calculating a first set of resources associated with the first sidelink feedback transmission and a second set of resources associated with the second sidelink feedback transmission, and
determining a collision of the first sidelink feedback transmission and the second sidelink feedback transmission based at least in part on the calculation;
or wherein transmitting the sidelink feedback channel collision indication further comprises:
transmitting the sidelink feedback channel collision indication after a collision of the first sidelink feedback transmission and the second sidelink feedback transmission.

8. The method of claim 1, wherein determining the one or more UEs further comprises:
determining that the first sidelink feedback transmission is associated with a re-transmission of a first sidelink shared channel from the first UE and the second sidelink feedback transmission is associated with an initial transmission of a second sidelink shared channel from the second UE, and
determining to transmit the sidelink feedback channel collision indication to the second UE based at least in part on the second sidelink feedback transmission being the initial transmission of the second sidelink shared channel;
or wherein transmitting the sidelink feedback channel collision indication further comprises:
transmitting a negative acknowledgment to the one or more UEs, the negative acknowledgment comprising the sidelink feedback channel collision indication;
or wherein transmitting the sidelink feedback channel collision indication further comprises:
transmitting, to the one or more UEs, an indication of a feedback channel resource mapping rule for the one or more UEs to use, the feedback channel resource mapping rule comprising the sidelink feedback channel collision indication.

9. A detecting user equipment, UE, for wireless communications, comprising a processor;
memory coupled with the processor; and
instructions stored in the memory and executable by the processor to cause the detecting UE to:
identify (1005) a sidelink feedback channel collision arising from a first sidelink feedback transmission to a first user equipment, UE, and a second sidelink feedback transmission to a second UE sharing same feedback channel resources;
identifying (1010), based at least in part on identification of the sidelink feedback channel collision, one or more UEs including at least one of the first UE and the second UE to which a sidelink feedback channel collision indication is to be transmitted; and
transmit (1015), based at least in part on the identification of the sidelink feedback channel collision, the sidelink feedback channel collision indication to the one or more UEs.

10. The detecting user equipment according to claim 9, comprising means for performing the method of any one of claims 2 to 8.

11. A computer program comprising instructions which, when the program is executed by a computer, cause the computer to carry out the method of one or more of claims 1 to 8.

## Patentansprüche

1. Ein Verfahren (1000) für drahtlose Kommunikationen an einem detektierenden Benutzergerät, UE, aufweisend:
Identifizieren (1005) einer Sidelink-Feedback-Kanalkollision, die aus einer ersten Sidelink-Feedback-Übertragung an ein erstes UE und einer zweiten Sidelink-Feedback-Übertragung an ein zweites UE, die gleiche Feedback-Kanalressourcen gemeinsam nutzen, entsteht;
Identifizieren (1010), zumindest teilweise basierend auf Identifikation der Sidelink-Feedback-Kanalkollision, eines oder mehrerer UEs, die mindestens eines des ersten UE und des zweiten UE beinhalten, an das eine Sidelink-Feedback-Kanalkollisionsanzeige zu übertragen ist; und
Übertragen (1015), zumindest teilweise basierend auf der Identifikation der Sidelink-Feedback-Kanalkollision, der Sidelink-Feedback-Kanalkollisionsanzeige an das eine oder die mehreren UEs.

2. Das Verfahren nach Anspruch 1, ferner aufweisend:
Empfangen, von mindestens dem ersten UE, einer Anforderung zum Überwachen auf mögliche Kollisionen zwischen Sidelink-Feedback-Kanälen und der ersten Sidelink-Feedback-Übertragung.

3. Das Verfahren nach Anspruch 1, ferner aufweisend:
Bestimmen einer ersten relativen Position des ersten UE zu dem detektierenden UE und einer zweiten relativen Position des zweiten UE zu dem detektierenden UE, wobei das Bestimmen des einen oder der mehreren UEs zum Übertragen der Sidelink-Feedback-Kanalkollisionsanzeige zumindest teilweise auf der ersten relativen Position und der zweiten relativen Position basiert,
vorzugsweise wobei Bestimmen des einen oder der mehreren UEs weiter aufweist:
Vergleichen der ersten relativen Position mit einem Distanzschwellenwert und der zweiten relativen Position mit dem Distanzschwellenwert, und
Bestimmen, die Sidelink-Feedback-Kanalkollisionsanzeige an das erste UE, das zweite UE oder beide zu übertragen, basierend zumindest teilweise darauf, dass die erste relative Position, die zweite relative Position oder beide jeweils kleiner als der Distanzschwellenwert sind, wobei das eine oder die mehreren UEs das erste UE, das zweite UE oder beide aufweisen;
oder wobei Bestimmen des einen oder der mehreren UEs weiter aufweist:
Bestimmen einer niedrigsten relativen Position zwischen der ersten relativen Position und der zweiten relativen Position, und
Bestimmen, die Sidelink-Feedback-Kanalkollisionsanzeige an das erste UE oder das zweite UE zu übertragen, basierend zumindest teilweise darauf, dass das erste UE oder das zweite UE jeweils mit der niedrigsten relativen Position assoziiert ist, wobei das eine oder die mehreren UEs das erste UE oder das zweite UE aufweisen.

4. Das Verfahren nach Anspruch 1, ferner aufweisend:
Bestimmen einer ersten Referenzsignal-Empfangsleistung, die mit dem ersten UE assoziiert ist, und einer zweiten Referenzsignal-Empfangsleistung, die mit dem zweiten UE assoziiert ist, wobei Bestimmen des einen oder der mehreren UEs zum Übertragen der Sidelink-Feedback-Kanalkollisionsanzeige zumindest teilweise auf der ersten Referenzsignal-Empfangsleistung und der zweiten Referenzsignal-Empfangsleistung basiert,
vorzugsweise wobei Bestimmen des einen oder der mehreren UEs weiter aufweist:
Vergleichen der ersten Referenzsignal-Empfangsleistung mit einem Referenzsignal-Empfangsleistungsschwellenwert und der zweiten Referenzsignal-Empfangsleistung mit dem Referenzsignal-Empfangsleistungsschwellenwert, und
Bestimmen, die Sidelink-Feedback-Kanalkollisionsanzeige an das erste UE, das zweite UE oder beide zu übertragen, basierend zumindest teilweise darauf, dass die erste Referenzsignal-Empfangsleistung, die zweite Referenzsignal-Empfangsleistung oder beide jeweils größer als der Referenzsignal-Empfangsleistungsschwellenwert sind, wobei das eine oder die mehreren UEs das erste UE, das zweite UE oder beide aufweisen;
oder wobei Bestimmen des einen oder der mehreren UEs weiter aufweist:
Bestimmen einer höchsten Referenzsignal-Empfangsleistung zwischen der ersten Referenzsignal-Empfangsleistung und der zweiten Referenzsignal-Empfangsleistung; und
Bestimmen, die Sidelink-Feedback-Kanalkollisionsanzeige an das erste UE oder das zweite UE zu übertragen, basierend zumindest teilweise darauf, dass das erste UE oder das zweite UE jeweils mit der höchsten Referenzsignal-Empfangsleistung assoziiert ist, wobei das eine oder die mehreren UEs das erste UE oder das zweite UE aufweisen.

5. Das Verfahren nach Anspruch 1, wobei Bestimmen des einen oder der mehreren UEs weiter aufweist:
Identifizieren einer ersten Sidelink-Steuerinformationsnachricht, die mit der ersten Sidelink-Feedback-Übertragung bei einer ersten Gelegenheit assoziiert ist;
Identifizieren einer zweiten Sidelink-Steuerinformationsnachricht, die mit der zweiten Sidelink-Feedback-Übertragung bei einer zweiten Gelegenheit assoziiert ist; und
Bestimmen, die Sidelink-Feedback-Kanalkollisionsanzeige an das zweite UE zu übertragen, basierend zumindest teilweise auf Empfangen der zweiten Sidelink-Steuerinformationsnachricht nach der ersten Sidelink-
Steuerinformationsnachricht, wobei das eine oder die mehreren UEs das zweite UE aufweisen,
vorzugsweise wobei Übertragen der Sidelink-Feedback-Kanalkollisionsanzeige weiter aufweist:
Übertragen der Sidelink-Feedback-Kanalkollisionsanzeige nach der zweiten Sidelink-Steuerinformationsnachricht und vor einer gleichen Zeitressource, die mit der ersten Sidelink-Feedback-Übertragung und der zweiten Sidelink-Feedback-Übertragung assoziiert ist.

6. Das Verfahren nach Anspruch 1, ferner aufweisend:
Bestimmen einer ersten Paketpriorität, die mit der ersten Sidelink-Feedback-Übertragung assoziiert ist, und einer zweiten Paketpriorität, die mit der zweiten Sidelink-Feedback-Übertragung assoziiert ist, wobei Bestimmen des einen oder der mehreren UEs zum Übertragen der Sidelink-Feedback-Kanalkollisionsanzeige zumindest teilweise auf der ersten Paketpriorität, der zweiten Paketpriorität und einem Kollisionsanzeigetyp basiert,
vorzugsweise wobei Bestimmen des einen oder der mehreren UEs weiter aufweist:
Bestimmen, dass der Kollisionsanzeigetyp Vor-Kollision ist und dass die erste Paketpriorität niedriger als die zweite Paketpriorität ist, und
Bestimmen, die Sidelink-Feedback-Kanalkollisionsanzeige an das erste UE zu übertragen, basierend zumindest teilweise darauf, dass das erste UE mit der niedrigeren Paketpriorität assoziiert ist, wobei das eine oder die mehreren UEs das erste UE aufweisen;
oder wobei Bestimmen des einen oder der mehreren UEs weiter aufweist:
Bestimmen, dass der Kollisionsanzeigetyp Nach-Kollision ist und dass die erste Paketpriorität höher als die zweite Paketpriorität ist; und
Bestimmen, die Sidelink-Feedback-Kanalkollisionsanzeige an das erste UE zu übertragen, basierend zumindest teilweise darauf, dass das erste UE mit der höheren Paketpriorität assoziiert ist, wobei das eine oder die mehreren UEs das erste UE aufweisen.

7. Das Verfahren nach Anspruch 1, wobei das Verfahren ferner aufweist:
Berechnen eines ersten Satzes von Ressourcen, die mit der ersten Sidelink-Feedback-Übertragung assoziiert sind, und eines zweiten Satzes von Ressourcen, die mit der zweiten Sidelink-Feedback-Übertragung assoziiert sind, und
Bestimmen einer Kollision der ersten Sidelink-Feedback-Übertragung und der zweiten Sidelink-Feedback-Übertragung zumindest teilweise basierend auf der Berechnung;
oder wobei Übertragen der Sidelink-Feedback-Kanalkollisionsanzeige ferner aufweist:
Übertragen der Sidelink-Feedback-Kanalkollisionsanzeige nach einer Kollision der ersten Sidelink-Feedback-Übertragung und der zweiten Sidelink-Feedback-Übertragung.

8. Das Verfahren nach Anspruch 1, wobei Bestimmen des einen oder der mehreren UEs weiter aufweist:
Bestimmen, dass die erste Sidelink-Feedback-Übertragung mit einer erneuten Übertragung eines ersten gemeinsam genutzten Sidelink-Kanals von dem ersten UE assoziiert ist und die zweite Sidelink-Feedback-Übertragung mit einer anfänglichen Übertragung eines zweiten gemeinsam genutzten Sidelink-Kanals von dem zweiten UE assoziiert ist, und
Bestimmen, die Sidelink-Feedback-Kanalkollisionsanzeige an das zweite UE zu übertragen, basierend zumindest teilweise darauf, dass die zweite Sidelink-Feedback-Übertragung die anfängliche Übertragung des zweiten gemeinsam genutzten Sidelink-Kanals ist;
oder wobei Übertragen der Sidelink-Feedback-Kanalkollisionsanzeige ferner aufweist:
Übertragen einer negativen Bestätigung an das eine oder die mehreren UEs, wobei die negative Bestätigung die Sidelink-Feedback-Kanalkollisionsanzeige aufweist;
oder wobei Übertragen der Sidelink-Feedback-Kanalkollisionsanzeige ferner aufweist:
Übertragen, an das eine oder die mehreren UEs, einer Anzeige einer Feedback-Kanalressourcenabbildungsregel für das eine oder die mehreren UEs zur Verwendung, wobei die Feedback-Kanalressourcenabbildungsregel die Sidelink-Feedback-Kanalkollisionsanzeige aufweist.

9. Ein detektierendes Benutzergeräts, UE, für drahtlose Kommunikationen, aufweisend
einen Prozessor;
Speicher, der mit dem Prozessor gekoppelt ist; und
Anweisungen, die in dem Speicher gespeichert sind und durch den Prozessor ausführbar sind, um das detektierende UE zu veranlassen zum:
Identifizieren (1005) einer Sidelink-Feedback-Kanalkollision, die aus einer ersten Sidelink-Feedback-Übertragung an ein erstes Benutzergerät, UE, und einer zweiten Sidelink-Feedback-Übertragung an ein zweites UE, die gleiche Feedback-Kanalressourcen gemeinsam nutzen, entsteht;
Identifizieren (1010), zumindest teilweise basierend auf Identifikation der Sidelink-Feedback-Kanalkollision, eines oder mehrerer UEs, die mindestens eines des ersten UE und des zweiten UE beinhalten, an das eine Sidelink-Feedback-Kanalkollisionsanzeige zu übertragen ist; und
Übertragen (1015), zumindest teilweise basierend auf der Identifikation der Sidelink-Feedback-Kanalkollision, der Sidelink-Feedback-Kanalkollisionsanzeige an das eine oder die mehreren UEs.

10. Das detektierende Benutzergeräts nach Anspruch 9, das Mittel aufweist zum Durchführen des Verfahrens nach einem der Ansprüche 2 bis 8.

11. Ein Computerprogramm, das Anweisungen aufweist, die, wenn das Programm durch einen Computer ausgeführt wird, den Computer veranlassen, das Verfahren nach einem oder mehreren der Ansprüche 1 bis 8 durchzuführen.

## Revendications

1. Un procédé (1000) de communication sans fil au niveau d'un équipement utilisateur, UE, de détection, comprenant :
l'identification (1005) d'une collision de canal de retour sidelink découlant d'une première transmission de retour sidelink à un premier UE et d'une seconde transmission de retour sidelink à un second UE partageant les mêmes ressources de canal de retour ;
l'identification (1010), sur la base au moins en partie de l'identification de la collision de canal de retour sidelink, d'un ou plusieurs UE incluant au moins l'un parmi le premier UE et le second UE auquel une indication de collision de canal de retour sidelink doit être transmise ; et
la transmission (1015), sur la base au moins en partie de l'identification de la collision de canal de retour sidelink, de l'indication de collision de canal de retour sidelink aux un ou plusieurs UE.

2. Le procédé selon la revendication 1, comprenant en outre :
la réception, à partir d'au moins le premier UE, d'une requête de surveillance de collisions possibles entre des canaux de retour sidelink et la première transmission de retour sidelink.

3. Le procédé selon la revendication 1, comprenant en outre :
la détermination d'une première position relative du premier UE à l'UE de détection et d'une seconde position relative du second UE à l'UE de détection, dans lequel la détermination des un ou plusieurs UE auxquels transmettre l'indication de collision de canal de retour sidelink est basée au moins en partie sur la première position relative et la seconde position relative,
de préférence dans lequel la détermination des un ou plusieurs UE comprend en outre :
la comparaison de la première position relative à un seuil de distance et de la seconde position relative au seuil de distance, et
la détermination de transmettre l'indication de collision de canal de retour sidelink au premier UE, au second UE, ou aux deux sur la base au moins en partie de la première position relative, de la seconde position relative, ou des deux, respectivement, qui sont inférieures au seuil de distance, les un ou plusieurs UE comprenant le premier UE, le second UE, ou les deux ;
ou dans lequel la détermination des un ou plusieurs UE comprend en outre :
la détermination d'une position relative la plus basse entre la première position relative et la seconde position relative, et
la détermination de transmettre l'indication de collision de canal de retour sidelink au premier UE ou au second UE sur la base au moins en partie du premier UE ou du second UE, respectivement, qui est associé à la position relative la plus basse, les un ou plusieurs UE comprenant le premier UE, ou le second UE.

4. Le procédé selon la revendication 1, comprenant en outre :
la détermination d'une première puissance reçue de signal de référence associée au premier UE et d'une seconde puissance reçue de signal de référence associée au second UE, dans lequel la détermination des un ou plusieurs UE pour transmettre l'indication de collision de canal de retour sidelink à est basée au moins en partie sur la première puissance reçue de signal de référence et la seconde puissance reçue de signal de référence,
de préférence dans lequel la détermination des un ou plusieurs UE comprend en outre :
la comparaison de la première puissance reçue de signal de référence à un seuil de puissance reçue de signal de référence et de la seconde puissance reçue de signal de référence au seuil de puissance reçue de signal de référence, et
la détermination de transmettre l'indication de collision de canal de retour sidelink au premier UE, au second UE, ou aux deux sur la base au moins en partie de la première puissance reçue de signal de référence, de la seconde puissance reçue de signal de référence, ou des deux, respectivement, qui sont supérieures au seuil de puissance reçue du signal de référence, les un ou plusieurs UE comprenant le premier UE, le second UE, ou les deux ;
ou dans lequel la détermination des un ou plusieurs UE comprend en outre :
la détermination d'une puissance reçue de signal de référence la plus élevée entre la première puissance reçue de signal de référence et la seconde puissance reçue de signal de référence ; et
la détermination de transmettre l'indication de collision de canal de retour sidelink au premier UE ou au second UE sur la base au moins en partie du premier UE ou du second UE, respectivement, qui est associé à la puissance reçue de signal de référence la plus élevée, les un ou plusieurs UE comprenant le premier UE, ou le second UE.

5. Le procédé selon la revendication 1, dans lequel la détermination des un ou plusieurs UE comprend en outre :
l'identification d'un premier message d'information de contrôle sidelink associé à la première transmission de retour sidelink au niveau d'une première occasion ;
l'identification d'un second message d'information de contrôle sidelink associé à la seconde transmission de retour sidelink au niveau d'une seconde occasion ; et
la détermination de transmettre l'indication de collision de canal de retour sidelink au second UE sur la base au moins en partie de la réception du second message d'informations de contrôle sidelink après le premier message d'informations de contrôle sidelink, les un ou plusieurs UE comprenant le second UE,
de préférence dans lequel la transmission de l'indication de collision de canal de retour sidelink comprend en outre :
la transmission de l'indication de collision de canal de retour sidelink après le second message d'information de contrôle sidelink et avant une même ressource temporelle associée à la première transmission de retour sidelink et à la seconde transmission de retour sidelink.

6. Le procédé selon la revendication 1, comprenant en outre :
la détermination d'une première priorité de paquet associée à la première transmission de retour sidelink et d'une seconde priorité de paquet associée à la seconde transmission de retour sidelink, dans lequel la détermination des un ou plusieurs UE auxquels transmettre l'indication de collision de canal de retour sidelink est basée au moins en partie sur la première priorité de paquet, la seconde priorité de paquet et un type d'indication de collision,
de préférence dans lequel la détermination des un ou plusieurs UE comprend en outre :
la détermination que le type d'indication de collision est pré-collision et que la première priorité de paquet est inférieure à la seconde priorité de paquet, et
la détermination de transmettre l'indication de collision de canal de retour sidelink au premier UE sur la base au moins en partie du premier UE qui est associé à la priorité de paquet inférieure, les un ou plusieurs UE comprenant le premier UE ;
ou dans lequel la détermination des un ou plusieurs UE comprend en outre :
la détermination que le type d'indication de collision est post-collision et que la première priorité de paquet est supérieure à la seconde priorité de paquet ; et
la détermination de transmettre l'indication de collision de canal de retour sidelink au premier UE sur la base au moins en partie du premier UE qui est associé à la priorité de paquet supérieure, les un ou plusieurs UE comprenant le premier UE.

7. Le procédé selon la revendication 1, dans lequel le procédé comprend en outre :
le calcul d'un premier ensemble de ressources associées à la première transmission de retour sidelink et d'un second ensemble de ressources associées à la seconde transmission de retour sidelink, et
la détermination d'une collision de la première transmission de retour sidelink et de la seconde transmission de retour sidelink sur la base au moins en partie du calcul ;
ou dans lequel la transmission de l'indication de collision de canal de retour sidelink comprend en outre :
la transmission de l'indication de collision de canal de retour sidelink après une collision de la première transmission de retour sidelink et de la seconde transmission de retour sidelink.

8. Le procédé selon la revendication 1, dans lequel la détermination des un ou plusieurs UE comprend en outre :
la détermination que la première transmission de retour sidelink est associée à une retransmission d'un premier canal partagé sidelink à partir du premier UE et que la seconde transmission de retour sidelink est associée à une transmission initiale d'un second canal partagé sidelink à partir du second UE, et
la détermination de transmettre l'indication de collision de canal de retour sidelink au second UE sur la base au moins en partie de la seconde transmission de retour sidelink qui est la transmission initiale du second canal partagé sidelink ;
ou dans lequel la transmission de l'indication de collision de canal de retour sidelink comprend en outre :
la transmission d'un accusé de réception négatif aux un ou plusieurs UE, l'accusé de réception négatif comprenant l'indication de collision de canal de retour sidelink ;
ou dans lequel la transmission de l'indication de collision de canal de retour sidelink comprend en outre :
la transmission, aux un ou plusieurs UE, d'une indication d'une règle de mappage de ressources de canal de retour à utiliser par les un ou plusieurs UE, la règle de mappage de ressources de canal de retour comprenant l'indication de collision de canal de retour sidelink.

9. Un équipement utilisateur, UE, de détection pour la communication sans fil, comprenant un processeur ;
une mémoire couplée au processeur ; et
des instructions stockées dans la mémoire et exécutables par le processeur pour amener l'UE de détection à :
identifier (1005) une collision de canal de retour sidelink découlant d'une première transmission de retour sidelink à un premier équipement utilisateur, UE, et d'une seconde transmission de retour sidelink à un second UE partageant les mêmes ressources de canal de retour ;
identifier (1010), sur la base au moins en partie de l'identification de la collision de canal de retour sidelink, un ou plusieurs UE incluant au moins l'un parmi le premier UE et le second UE auquel une indication de collision de canal de retour sidelink doit être transmise ; et
transmettre (1015), sur la base au moins en partie de l'identification de la collision de canal de retour sidelink, l'indication de collision de canal de retour sidelink aux un ou plusieurs UE.

10. L'équipement utilisateur de détection selon la revendication 9, comprenant en outre des moyens pour réaliser le procédé selon l'une des revendications 2 à 8.

11. Un programme de calculateur comprenant des instructions qui, lorsque le programme est exécuté par un calculateur, amènent le calculateur à réaliser le procédé selon l'une des revendications 1 à 8.
